# FASCICULE DE BREVET EUROPEEN

(11) **EP 3 925 027 B1**
(45) Date de publication et mention de la délivrance du brevet: **12.02.2025**
(21) Numéro de dépôt: 20713064.2
(22) Date de dépôt: 13.02.2020
(51) Int. Cl.: B60L 1/00, B60L 50/64, B60L 58/26, B60L 58/27, H01M 10/6568, H01M 10/658, H01M 50/209, H01M 50/249, H01M 10/625, H01M 10/6552, H01M 10/6556, H01M 10/6557, H01M 10/6563, H01M 50/289

(54) **STRUCTURE DE GESTION THERMIQUE DE BATTERIE ELECTRIQUE**
WÄRMEMANAGEMENTSTRUKTUR FÜR ELEKTRISCHE BATTERIE
ELECTRIC BATTERY THERMAL MANAGEMENT STRUCTURE

(30) Priorité: 14.02.2019 FR 1901534
(43) Date de publication de la demande: 22.12.2021
(73) Titulaire: HUTCHINSON, 75008 Paris (FR)
(72) Inventeur: CHOPARD, Fabrice, 38400 Saint Martin d'Heres (FR); BLANCHARD, Clément, 45200 Amilly (FR)
(74) Mandataire: Ernest Gutmann - Yves Plasseraud S.A.S.
(86) Numéro de dépôt international: PCT/FR2020/000031
(87) Numéro de publication internationale: WO 2020/165508

(56) Documents cités:
- EP-A1- 2 993 435
- FR-A1- 3 060 863
- US-A1- 2012 308 868
- US-A1- 2013 316 211

## Description

### Domaine technique de l'invention :

La présente invention concerne le domaine de la gestion thermique.

Est en particulier concerné un assemblage permettant la gestion thermique d'un élément producteur temporaire de chaleur.

### Etat de la technique antérieure :

Dans une batterie d'accumulateurs électriques, il peut être très utile de pouvoir réguler la température opérationnelle des cellules qui chauffent quand elles produisent du courant et qui favorablement doivent rester dans une plage de température précises quelles que soient les conditions de températures extérieures même lorsque les cellules sont à l'arrêt. L'expression « batterie » a pour sens « dispositif électrique » et est donc à comprendre comme tout dispositif qui génère et/ou converti et/ou stocke de l'électricité. Les dispositifs électrochimiques sont donc concernés.

Dans ce contexte, on conçoit donc qu'il puisse être nécessaire, suivant les situations :
- d'isoler de l'environnement extérieur ou de gérer l'évolution de température d'une ou plusieurs cellules de batterie électrique,
- et/ou de retarder ou au contraire favoriser la propagation d'un flux thermique hors ou vers ces cellules.

Faire circuler au moins un fluide dans un assemblage adapté à participer à cette gestion thermique peut alors être également nécessaire.

Il existe de tels assemblages qui présentent pour cela des passages de circulation de fluide, établis entre deux couches de matière, entre une entrée et une sortie pour le fluide, de façon que, vis-à-vis du fluide, soit obtenue une isolation thermique - si les couches sont thermiquement isolantes - ou un échange thermique - par exemple si les couches contiennent un MCP, dénomination convenue pour un matériau à changement de phase, PCM en anglais, à changement d'états par exemple entre liquide et solide.

Ainsi, FR3015780 divulgue l'utilisation de canaux fluidiques disposés dans du MCP et permettant une circulation d'un fluide caloporteur, notamment liquide. Les canaux fluidiques sont formés dans un bloc rigide permettant de les maintenir en place lorsque le matériau à changement de phase MCP passe à l'état liquide.

Il s'agit là d'un ensemble assez complexe à fabriquer. En outre rien n'indique comment obtenir la forme des couches de MCP ni celle du « bloc rigide » permettant de maintenir en place les canaux fluidiques.

FR 3 060 863 divulgue une autre solution où un module contenant un matériau à changement de phase est agencé entre une première et une deuxième cellules de batterie électrique, en échange thermique avec elles. Un passage d'air existe de part et d'autre du module, de façon à permettre une circulation d'air entre la première cellule et le module et entre la deuxième cellule et le module.

### Présentation de l'invention :

Parmi les problèmes que l'on a souhaité ici résoudre apparait :
- celui lié à la réalisation performante d'assemblages adaptés à participer à une gestion thermique de cellules ou groupes de cellules, dans le cas où des conditions opératoires variables dans le temps sont rencontrées, et/ou
- celui lié à la maitrise tant d'une situation nominale de fonctionnement de ces cellules que d'une situation d'échauffement, voire de refroidissement, anormale, excessive, d'au moins une dite cellule.

### Résumé de l'invention :

Une solution proposée à tout ou partie des inconvénients et/ou des problèmes susmentionnés consiste ainsi en un assemblage comprenant :
- plusieurs cellules ou groupes de cellules d'une batterie électrique de véhicule, dont au moins:
   -- une première cellule et une deuxième cellule séparées l'une de l'autre par un espace, ou
   -- un premier groupe et un deuxième groupe de cellules séparés l'un de l'autre par un espace,
- au moins deux parmi :
   -- au moins un premier passage de fluide passant dans ledit espace, situé entre deux premiers côtés opposés se faisant face :
      --- de la première cellule et de la deuxième cellule respectivement, ou
      --- des premier et deuxième groupes de cellules respectivement,

le premier passage étant relié à une première alimentation en fluide à faire circuler en échange thermique avec les première et deuxième cellules ou les premier et deuxième groupes de cellules,
   -- au moins un deuxième passage de fluide situé sur des deuxièmes côtés:
      --- de la première cellule et de la deuxième cellule respectivement, ou
      --- des premier et deuxième groupes de cellules respectivement,
le deuxième passage étant relié à une deuxième alimentation en fluide à faire circuler en échange thermique avec les première et deuxième cellules ou les premier et deuxième groupes de cellules, et,
   -- au moins un passage périphérique de fluide situé autour des cellules ou groupes de cellules, en échange thermique avec elles/eux, sur des côtés autres que lesdits premiers côtés des cellules ou groupes de cellules, respectivement, ledit passage périphérique étant relié à une autre alimentation en fluide à faire circuler en échange thermique avec lesdites cellules ou groupes de cellules, et
      - un isolant thermique situé de telle sorte que ledit deuxième passage ou passage périphérique est interposé entre l'isolant thermique, et :
         -- au moins les première et deuxième cellules, ou
         -- au moins les premier et deuxième groupes de cellules.

En alternative, l'assemblage précité sera tel :
- qu'il comprendra, en plus :
   -- au moins une structure contenant (au moins) un matériau à changement de phase, la structure étant disposée entre deux premiers côtés opposés se faisant face :
      --- de la première cellule et de la deuxième cellule respectivement, ou
      --- des premier et deuxième groupes de cellules respectivement,
   -- ou au moins une autre dite structure contenant un matériau à changement de phase et disposée autour des cellules ou groupes de cellules,
- que, dans ledit espace, le fluide sera à faire circuler en échange thermique avec le matériau à changement de phase de la structure, et/ou
- que dans ledit passage périphérique, le fluide sera à faire circuler en échange thermique avec le matériau à changement de phase de ladite autre structure.

De la sorte, on peut attendre une efficacité réelle quant à la gestion thermique des cellules ou groupes de cellules vs. leur gamme optimale de températures de fonctionnement.

Dans l'art antérieur, il n'a jamais été encore été divulgué que, comme ici proposé, soit mis en œuvre un « assemblage » ou système de gestion thermique d'une batterie, telle qu'une batterie d'accumulateurs, comprenant trois circuits (appelé ci-avant « passages ») de régulation thermique, à la fois:
- un premier circuit passant entre deux cellules adjacentes,
- un second circuit passant autour de l'empilement des cellules (quelle que soit la direction de cet empilement : vertical ou autre),
un troisième circuit passant :
- sur (le long) une face de cellule(s) autre que celle où passe le premier circuit,
- voire possiblement aussi sur (le long) une face de cellule(s) autre que celle où passe le second circuit.

Notamment, la face où passe le troisième circuit peut être la face inférieure de la batterie (orientée vers le bas).

La structure pourra comporter une enveloppe protectrice (telle qu'une poche plastique) contenant le(s) matériau(x) à changement de phase. Ce(s) matériau(x) à changement de phase pourra(ont) aussi être contenu(s) dans une matrice d'enrobage, par exemple caoutchouteuse, évitant notamment tout problème de fuite, même avec des MCP à phases solide/liquide.

Il est en outre précisé que, dans le texte :
- thermiquement conducteur veut dire à conductivité supérieure ou égale à 0.5 W/m.K-1,
- thermiquement isolant veut dire à conductivité inférieure ou égale à 0.2 W/m.K-1,
- que, probablement, le véhicule précité sera hybride ou électrique et que la batterie pré-mentionnée servira à son déplacement autonome (voir plus loin dans la description).

Qu'il y ait ou pas de structure avec MCP, il est aussi proposé, pour réguler finement la température de la batterie en évitant tant les emballements potentiellement destructeurs que les pertes de performances dues à des sautes de températures inadaptées, que :
- soient adjoints des moyens de régulation d'écoulement de fluide(s) agissant (en liaison avec les première, deuxième et/ou autre alimentations en fluide) pour assurer une circulation de fluide en dit échange thermique,
- avec alors, de préférence, une telle circulation de fluide en échange thermique:
   -- via l'une au moins des première, deuxième et/ou autre alimentations en fluide, pendant une première période de temps, et
   -- via au moins deux des première, deuxième et/ou autre alimentations en fluide, pendant une seconde période de temps.

Ces moyens précités de régulation d'écoulement de fluide(s) pourront en outre comprendre :
- des vannes sur les première, deuxième et/ou autre alimentations en fluide, et
- des moyens de commande des vannes agissant en fonction de données de température de dites cellules ou groupes de cellules et/ou de données relatives à la charge ou la décharge électrique de la batterie.

On tendra ainsi vers une gestion thermique active de la batterie finement pilotée.

Le terme vanne doit être compris comme tout obturateur permettant de laisser passer ou d'interdire le passage d'un fluide dans un conduit (électrovanne, robinet...).

Appliqué dans un véhicule disposé dans un environnement extérieur, l'assemblage en cause pourra utilement être tel que les moyens de commande des vannes comprennent :
- un premier capteur de température pour capter la température sur ou à proximité desdites cellules ou groupes de cellules, et un deuxième capteur de température pour capter la température de l'environnement extérieur du véhicule, et/ou
- un capteur (ou moyen de calcul) permettant d'acquérir des données relatives à la profondeur de décharge (DOD) de la batterie, et/ou à l'état de charge (SOC) de la batterie,
- des moyens d'actionnement des vannes, et
- une unité de traitement de données connectée:
   -- auxdits moyens d'actionnement des vannes, et
   -- auxdits premier et deuxième capteurs de température, et/ou audit capteur (ou moyen de calcul) permettant d'acquérir des données relatives à la profondeur de décharge de la batterie, et/ou à l'état de charge de la batterie, de façon qu'au moins certaines desdites actions sur les vannes tiennent compte :
      --- de données de température desdits premier et/ou deuxième capteurs de température, et/ou
      --- de données issues dudit capteur (ou moyen de calcul) permettant d'acquérir des données relatives à la profondeur de décharge de la batterie, et/ou à l'état de charge de la batterie.

Ainsi, on pourra piloter finement la gestion thermique de la batterie, de façon graduelle et on pourra éviter d'utiliser inutilement du fluide.

Dans le même but, on pourra ultimement prévoir que lesdites certaines actions sur les vannes tiennent compte :
- de données de température au moins du deuxième capteur de température, pendant la première période de temps au moins,
- de données de température de température au moins du premier capteur, pendant la deuxième période de temps au moins.

Pour concourir aussi à l'efficacité thermique attendue sur des structures avec MCP, il est proposé qu'en face d'une dite cellule, la ou chaque structure soit en contact contre cette cellule, sans circulation ventilée de fluide entre eux.

Si la ou chaque structure présente, en face des cellules, une surface pleine, continue, pour un échange thermique non-discret avec elles, on évitera de fait une telle circulation ventilée.

Si l'assemblage comprend, dans ledit espace inter-cellules, au moins deux dites structures et au moins un isolant thermique interposé entre lesdites au moins deux structures, on contrera efficacement les transferts thermiques des première et deuxième cellules entre elles, évitant ainsi un emballement du système en cas de surchauffe d'une ou de quelques cellules.

De nouveau qu'il y ait ou pas de structure avec MCP, il est aussi proposé, pour maîtriser la rapidité d'action du fluide concerné sur la température de la batterie, de ne faire circuler ce(s) fluide(s) qu'à certains moments, quand les conditions conviennent. Et une solution préférée proposée ici est aussi que l'assemblage comprenne un dispositif d'apport de calories ou de frigories placé en échange thermique avec l'un au moins desdits fluides, en amont de l'échange thermique avec les cellules.

Une manière alternative ou complémentaire de traiter la même question est que ledit assemblage soit tel:
- qu'il comprenne deux plaques thermiquement conductrices, ou deux séries de telles plaques définissant alors plusieurs dits deuxièmes passages de fluide agencés en parallèle,
- que ledit fluide à faire circuler dans lesdits premiers passages soit un premier fluide, et
- que ledit fluide à faire circuler dans les deuxièmes passages soit un deuxième fluide différent du premier fluide, et,
- que les premier et deuxième fluides circulent dans des circuits séparés.

Ainsi on pourra moduler les échanges thermiques assurés par ces fluides. En particulier un gaz et un liquide pourront utiliser respectivement.

Encore une manière alternative ou complémentaire de traiter la même question est que ledit passage périphérique de fluide communique avec :
- le premier passage de fluide, et/ou
- le deuxième passage de fluide,
de sorte que du fluide à y faire circuler soit au moins en partie commun.

Ceci permettra une économie de moyens, tout en pouvant rendre la température d'échange via les premier(s) et/ou deuxième(s) passages fonction de celle via lesdits passages périphériques. On pourra alors préférer que le fluide circule d'abord dans les passages périphériques puis dans lesdits premier(s) et/ou deuxième(s) passages, si les deux sont prévus, permettant ainsi de maximiser la capacité d'échange globale au niveau du groupe de cellules ou du pack batterie complet, avant que le fluide circule à cœur, entre deux cellules ou deux groupes de cellules.

Encore une autre possibilité prévue est celle (a) dans laquelle on aurait plus d'un fluide qui circulerait sur un même côté, dans lesdits premiers et/ou deuxièmes passages et/ou dans les passages périphériques ; typiquement un fluide gazeux et un liquide sur un tel même côté. Ainsi, on pourra augmenter encore les échanges thermiques sur un même côté et/ou accroître la compacité de l'assemblage.

On pourrait aussi ainsi prévoir de faire circuler différemment lesdits fluides, en fonction du moment.

Par exemple, on pourra faire circuler dans les passages précités, d'un même côté :
- de l'air uniquement, ceci en fonctionnement nominal de la batterie (dans sa gamme optimale de températures de fonctionnement ; soit entre 25°C et 35°C pour une batterie Li-ion), et
- de l'eau glycolée, en fonctionnement critique ou de charge rapide de ladite batterie.

En d'autres termes, on pourra prévoir que :
- entre deux dits premiers côtés opposés se faisant face, ou
- sur lesdits deuxièmes côtés, ou
- sur lesdits côtés autres que les premiers côtés des cellules ou groupes de cellules, respectivement,
soient disposés respectivement plusieurs premiers passages de fluides, ou plusieurs deuxièmes passages de fluides, ou plusieurs passages périphériques de fluides, séparés les uns des autres, de façon que des fluides différents puissent y circuler sans se mélanger entre eux.

Un but de ce type montage « deux dans un » (plusieurs fluides passant le long d'un même côté) étant l'efficience en termes de rendement de l'échange thermique, on pourra trouver intérêt à ce que l'un au moins desdits plusieurs premiers ou deuxièmes passages de fluides, ou plusieurs passages périphériques de fluides soit disposé au contact d'un matériau à changement de phase avec lequel il y aura échange thermique quand du fluide circulera. Le MCP augmentera la performance de cet échange.

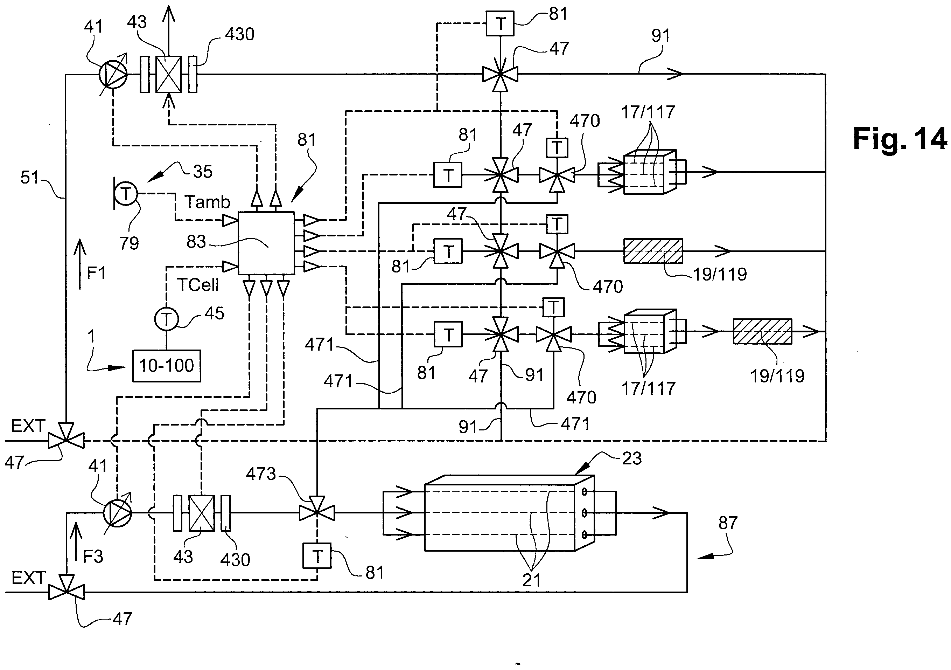

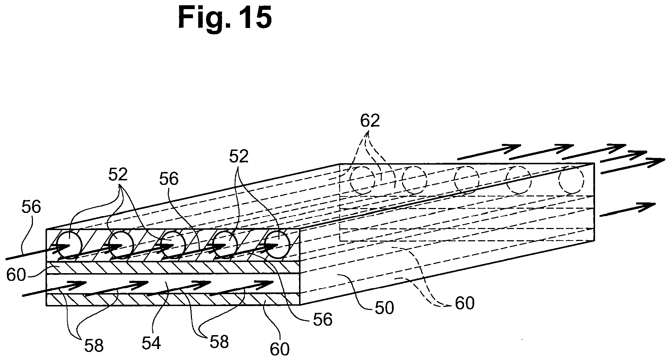

Il est précisé que cette solution (voir à partir de (a) ci-avant) peut être dissociée des autres aspects ici présentés et être donc réalisée indépendamment d'eux. Il est considéré qu'il s'agit là d'une innovation en soi (voir aussi description des figures 14 et 15).

Pour maîtriser en particulier la consommation du fluide circulant dans le(s) deuxième(s) passage(s), voire l'utilisation de ce fluide dans un autre circuit du véhicule (comme son circuit d'eau), il est aussi proposé que ledit assemblage comprenne au moins un recyclage dans lequel le deuxième passage de fluide communiquera avec un circuit de recyclage. Ainsi, on pourra réintroduire dans la deuxième alimentation (telle qu'une alimentation en eau) une partie au moins dudit fluide issu du deuxième passage de fluide, après passage dans le dispositif d'apport de calories ou de frigories.

En liaison avec cet aspect différents entre eux des premier et deuxième fluides, gaz/liquide par exemple, on pourra trouver intérêt à ce que ledit fluide à faire circuler dans le deuxième passage passe là entre :
- deux plaques thermiquement conductrices, ou
- deux séries de plaques thermiquement conductrices définissant plusieurs dits deuxièmes passages de fluide agencés en parallèle.

Ainsi, on associera une large surface d'échange avec un fluide thermiquement performant.

Favorablement, le(chaque) deuxième passage de fluide et lesdites plaques seront disposés sous la batterie électrique, limitant ainsi les problèmes d'étanchéité dus à un fluide liquide.

L'invention pourra si nécessaire être comprise encore plus en détails à la lecture de la description suivante faite à titre d'exemple non limitatif en référence aux dessins annexés.

### Brève description des figures :

Dans ces dessins :
[Fig. 1] et [Fig. 2] schématisent respectivement réuni et en éclaté un assemblage de gestion thermique de cellules prismatiques de batterie à double flux de fluides, respectivement en surface (ici dessous) et à cœur (entre deux cellules successives),
[Fig. 3] reprend la figure 1 dans une option de flux de fluide circulant toujours à cœur, mais entre deux groupes successifs de cellules ;
[Fig. 4] schématise (en vue éclatée) des éléments de l'assemblage imaginé selon l'invention, autour de groupes de cellules de batterie, pour en assurer une gestion thermique périphérique;
[Fig. 5] schématise un boîtier pour le(s) passage(s) périphérique(s) de fluide ;
[Fig. 6] schématise un groupe de cellules avec des passages périphériques sur deux faces opposées ;
[Fig. 7] et [Fig. 8] schématisent deux branchement électriques possibles de cellules ;
[Fig. 9] schématise un véhicule équipé de l'assemblage de gestion thermique de l'invention ;
[Fig. 10] schématise, au niveau du pack batterie, un tel pack lui aussi équipé de l'assemblage de gestion thermique de l'invention, suivant la coupe X-X de la figure 4 ;
[Fig. 11], Fig. 12] et [Fig. 13] schématisent trois montages pourvus de l'assemblage de gestion thermique de l'invention, sur des circuits pour successivement un, deux et trois fluides ; et
[Fig. 14] et [Fig. 15] se réfèrent à une variante de réalisation multi-fluides.

### Description détaillée de l'invention (mode(s) de réalisation non limitatif(s)/exemple(s) uniquement :

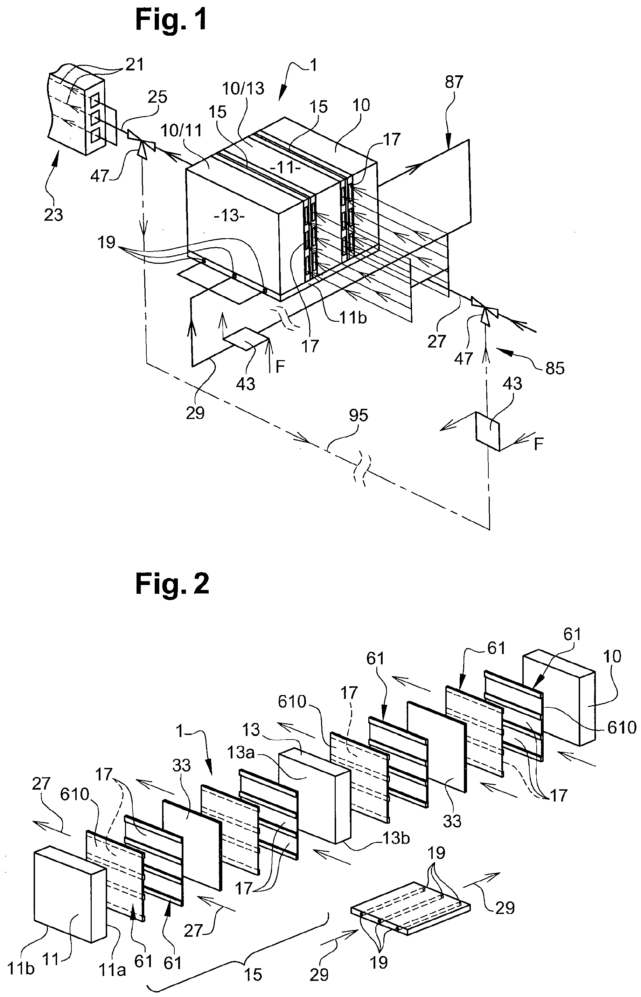

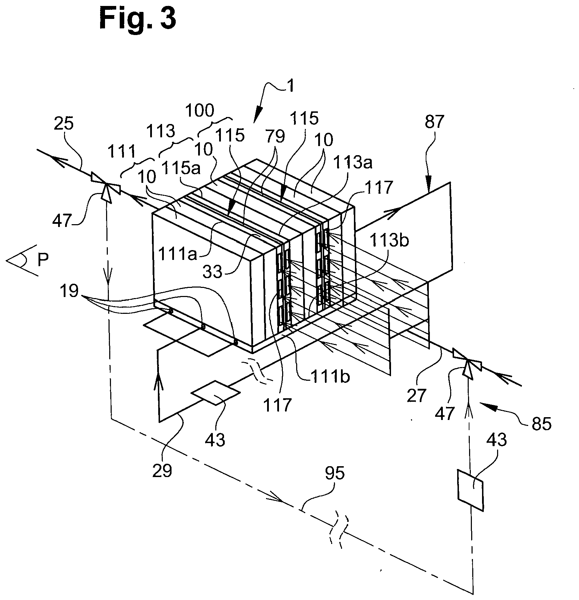

Comme énoncé ci-avant et illustré, un aspect de l'invention concerne un assemblage, avec un montage qui se rapporte à une batterie électrique (ou pack batterie) 1 dont la gestion thermique « à cœur » est individualisée :
- soit par cellule 10 (figures 1-2),
- soit par groupe 100 de cellules (figure 3).

Ainsi, suivant le cas, l'assemblage comprend :
- plusieurs cellules 10 ou groupes 100 de cellules d'une batterie électrique 1 de véhicule, dont au moins :
   -- une première cellule 11 et une deuxième cellule 13 séparées l'une de l'autre par un espace 15 situé entre deux premiers côtés (11a,13a) opposés de la première cellule et de la deuxième cellule respectivement, se faisant face (figures 1-2), ou
   -- un premier groupe 111 et un deuxième groupe 113 de telles cellules séparés l'un de l'autre par un espace 115 situé entre deux premiers côtés (111a,113a) opposés du premier groupe 111 et un deuxième groupe 113 de telles cellules, respectivement, se faisant face (figure 3).

Outre cela, l'assemblage comprend (au moins) un premier passage 17 ou 117 de fluide dans l'espace 15 ou 115, situé entre lesdits deux premiers côtés opposés se faisant face, suivant le cas :
- de la première cellule et de la deuxième cellule respectivement : voir les côtés respectifs 11a,13a (figures 1-2), ou
- des premier et deuxième groupes de cellules respectivement : voir les côtés respectifs 111a,113a (figure 3).

Le premier passage 17 ou 117 est relié à une première alimentation 27 en fluide à faire circuler en échange thermique directement entre cellules 10 ou entre groupes 100 de cellules.

Ainsi, par exemple, l'un des premiers passages 17 ou 117 sera relié à une première alimentation 27 en fluide à faire circuler en échange thermique avec, et entre, les première et deuxième cellules 11,13 (figures 1-2) ou les premier et deuxième groupes 111,113 de cellules (figure 3).

Outre cela, l'assemblage comprend aussi (au moins) un deuxième passage 19 ou 119 de fluide situé sur:
- des deuxièmes côtés 11b,13b de la première cellule 11 et de la deuxième cellule 13, respectivement, ou
- des deuxièmes côtés 111b,113b des premier et deuxième groupes 111,113 de cellules, respectivement.

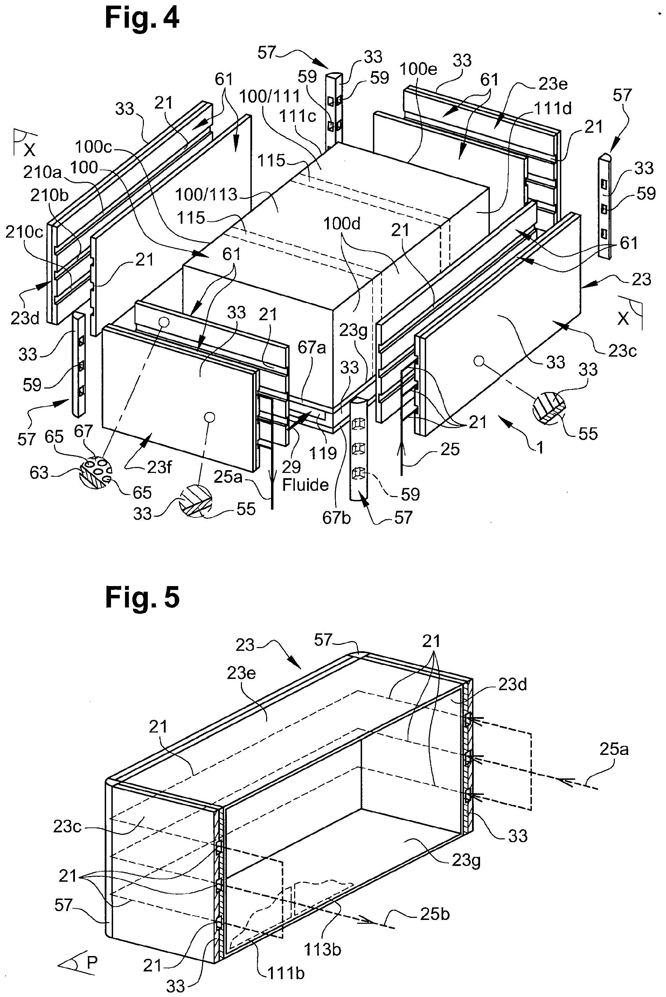

On aura compris que lesdits deuxièmes côtés sont différents desdits premiers côtés précités. Les deuxièmes côtés sont côte à côte. Ils peuvent typiquement être situés dans un même plan (voir plan P figure 3 ou 5).

Le deuxième passage 19 ou 119 est relié à une deuxième alimentation 29 en fluide à faire circuler en échange thermique avec les première et deuxième cellules ou les premier et deuxième groupes de cellules.

En complément ou en place du/des deuxième(s) passage(s) 19 ou 119 de fluide, l'assemblage comprend (au moins) un passage périphérique 21 de fluide (figures 4-5) situé autour des cellules 10 ou des groupes 100 de cellules (figure 4), en échange thermique avec elles/eux, sur des côtés, tels que 100c,100d,100e ou 111c,111d,100e, autres que lesdits premiers côtés (11a,13a ;111a,113b) précités des cellules 10 ou groupes 100 de cellules, respectivement.

Ainsi, ce (au moins) un passage périphérique 21 de fluide pourra s'étendre le long de plusieurs parois 23, notamment trois parois ou faces périphériques, adjacentes et successives, telles que 23c,23e,23d entourant sur plusieurs côtés ou faces les cellules 10 ou des groupes 100 de cellules.

Ces parois ou faces périphériques, pourront être, latéralement (par exemple verticalement) :
- deux faces opposées, telles que 23c, 23d figure 5,
- trois faces successives, telles que 23c,23e,23d figure 5,

Autre possibilité :
- quatre faces, telles que 23c,23e,23d,23f (verticales) ; voir figure 4.

Encore autre possibilité :
- quatre faces, telles que 23c,23e,23d (verticales) et 23g (horizontale, inférieure, de fond) ; voir figures 4-5, ou
- cinq faces, telles que 23c,23e,23d,23f (verticales) et 23g (horizontale, inférieure, de fond).

En effet, on pourra confondre au moins une partie du deuxième passage 19 ou 119 de fluide sur lesdits deuxièmes côtés avec au moins une partie du passage périphérique 21 de fluide passant dans la paroi ou face 23g ; voir figure 5 en bas à gauche.

Le passage périphérique 21 sera relié à une autre alimentation 25 en fluide (entrée 25a, sortie 25b) à faire circuler en échange thermique avec lesdites cellules 10 ou groupes 100 de cellules.

Les parois 23, fonctionnalisées avec ces passages internes de fluide(s), pourront former un boîtier sur deux, trois, quatre ou cinq côtés de la batterie.

A priori on évitera de fonctionnaliser ainsi, avec tels passages, au moins une face de la batterie 1.

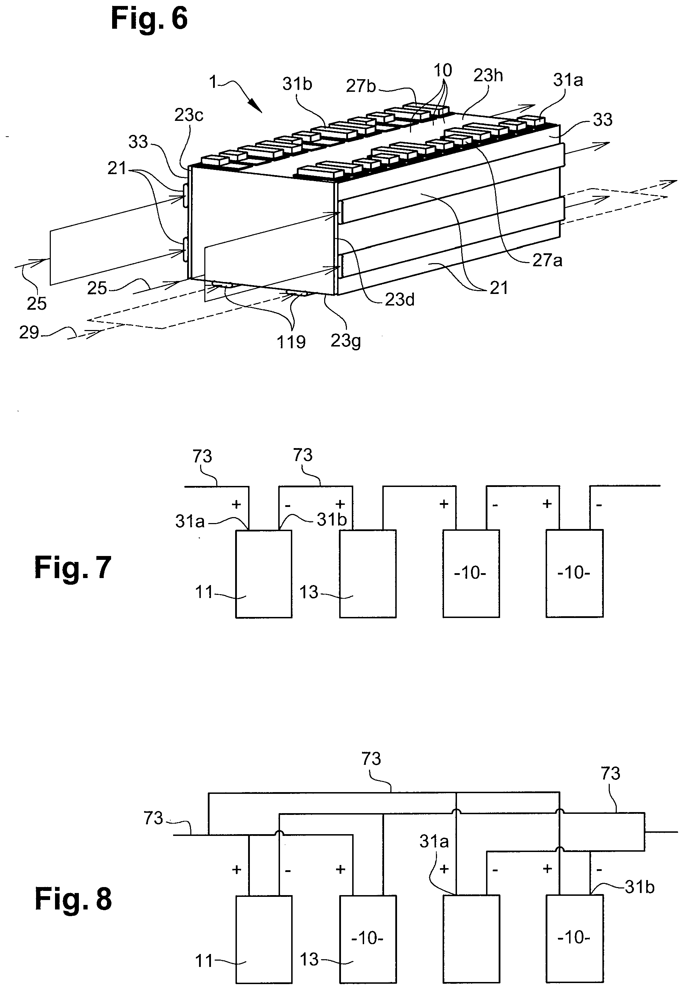

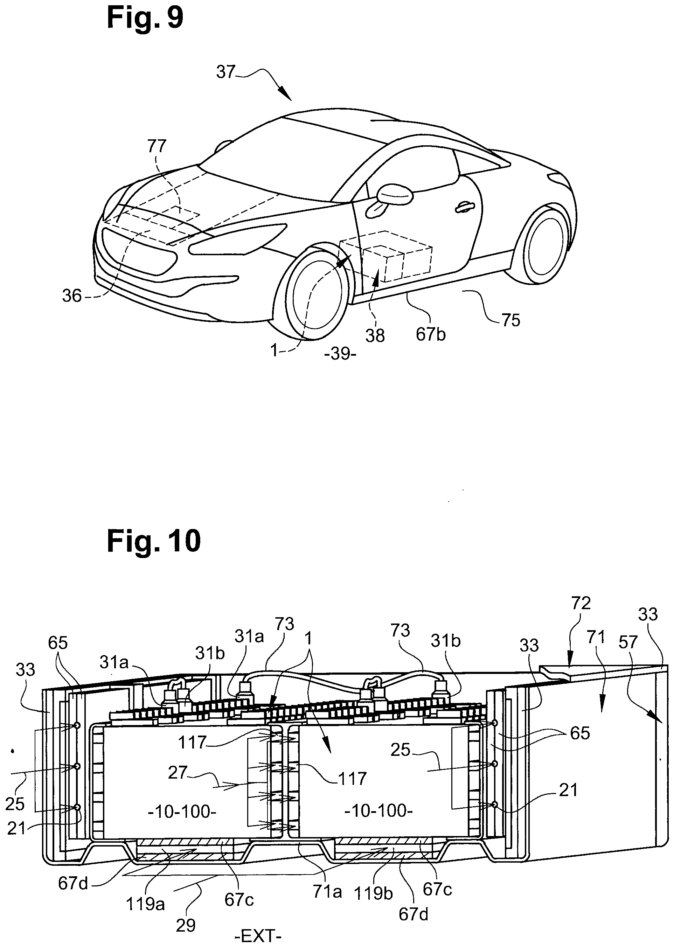

Ce devrait souvent être au moins la face horizontale supérieure, repérée 23h figure 6, là où les cellules 10 (du moins celles parallélépipédiques de type Li-ion présentées en exemple non limitatif sur les figures) ont leurs connexions électriques 31a (borne+), 31b (borne -) ; connexions non schématisées sur les autres figures, hormis figures 7 et 10.

A ce sujet, il est précisé que, comme schématisé figures 7-8, les branchements électriques de ces cellules 10 via leurs bornes 31a, 31b pourra être en série, comme figure 7, ou en en série et parallèle, comme dans l'exemple de la figure 8.

A noter aussi que, figure 5, l'ensemble formé par les parois 23 et les piliers 57 d'angles pourra être basculer de 90° vers le haut, de façon que la face ouverte soit alors celle supérieure et qu'ainsi, comme dans la version de la figure 10, un couvercle puisse venir la fermer, pardessus la face de la batterie présentant ses bornes de connexion.

Outre ce qui a déjà été mentionné, l'assemblage de l'invention comprend aussi (au moins) un isolant thermique 33 (figure 4) situé de telle sorte que ledit deuxième passage 19 ou 119 et/ou le passage périphérique 21 soit interposé entre l'isolant thermique 33 et :
- au moins les première et deuxième cellules, telles que 11,13, ou
- au moins les premier et deuxième groupes de cellules, telles que 111,113.

L'isolant thermique 33 sera utilement sous forme d'un ou plusieurs panneaux, feuilles ou plaques.

L'isolant thermique 33 pourra être un isolant poreux. Il pourra être disposé dans une poche comportant une enveloppe 55 fermée (figure 4). L'enveloppe 55, thermiquement conductrice, pourra être plastique ou métallique. Pour former une poche sous vide (de type PIV), l'enveloppe 55 devra être étanche au gaz et sous vide interne partiel (par exemple entre 10 et 10⁴Pa).

Ainsi l'isolant thermique 33 pourra utilement doubler au moins deux côtés opposés du pack batterie 1, en s'étendant donc autour des cellules 10 ou groupes 100 de cellules, globalement; cf. figure 4.

Avec deux, trois ou quatre panneaux, feuilles ou plaques d'isolant thermique 33 sur les deux, trois ou quatre côtés latéraux verticaux du pack batterie 1, et desdits passages périphériques 21 interposés entre cet isolant thermique 33 et le contour latéral extérieur vertical du pack batterie, on va préserver utilement le pack batterie vis-à-vis de son environnement extérieur. Pour la circulation du fluide dans le(s) passage(s) périphérique(s) 21, des blocs ou piliers 57 d'angles pourront être disposés aux coins, entre deux panneaux latéraux d'isolant thermique 33 adjacents. Chaque bloc 57 d'angle intègre un ou plusieurs conduits 59 à connecter individuellement au(x) passage(s) périphérique(s) 21 situé(s) en face. Chaque conduit 59 est incurvé pour que le fluide passe l'angle correspondant. De préférence, chaque bloc 57 d'angle sera en matériau isolant thermique (mousse PU par exemple). Figure 4, des flèches marquent, au niveau du pack batterie, les entrées et sorties du fluide 25.

Une fois les capacités d'isolation et de circulation de fluide assurées comme ci-avant, un autre aspect de l'invention concerne la régulation d'écoulement de ce(s) fluide(s) via donc les première et, deuxième et/ou autre alimentations en fluide.

Plus précisément, il est prévu à cette fin que l'assemblage précité comprenne aussi des moyens 35 de régulation visant à assurer une circulation de fluide(s) en dit échange thermique:
- via l'une au moins des première, deuxième et autre alimentations en fluide 25,27,29, pendant une première période de temps, et
- via au moins deux des première, deuxième et autre alimentations en fluide 25,27,29, pendant une seconde période de temps.

On aura compris que ces première et seconde périodes de temps sont des moments inclus dans le temps pendant lequel la batterie est active c'est-à-dire en charge électrique et/ou en décharge électrique, les deux pouvant être concomitant.

Ainsi, supposons que l'on fasse démarrer un véhicule hybride ou électrique 37 (figure 9).

S'il s'agit d'un véhicule hybride, il y a deux moteurs à bord pour déplacer le véhicule: un moteur thermique 36 et un moteur électrique 38. Le pack batterie 1 est au moins connecté au moteur électrique 38 pour le faire fonctionner.

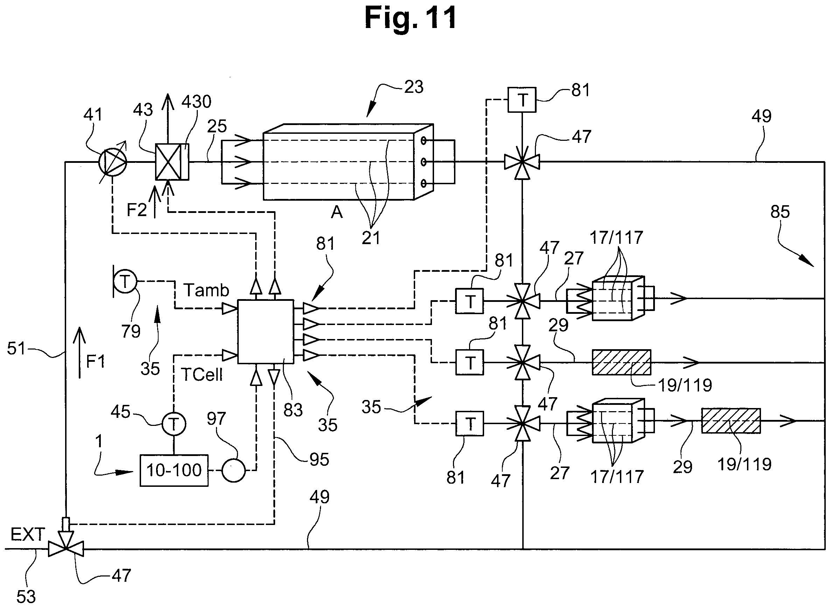

Fonctionnant normalement, les cellules, par exemple lithium-ion, de la batterie 1 - qui servent donc au déplacement autonome du véhicule - vont rapidement dissiper de l'énergie (décharge en roulage classique). Par exemple de l'air de refroidissement peut alors être aspiré, via une pompe ou un ventilateur 41 (figure 11), depuis l'environnement extérieur 39 (figure 9 ; et EXT figure 11 notamment) et passer si nécessaire au travers d'un échangeur 43 pouvant intégrer un déshumidificateur. On peut ensuite prévoir de faire passer l'air, en tant que fluide 25, dans le passage périphérique 21 de fluide, lequel peut comprendre une série de canaux sur la périphérie du pack batterie 1.

Tant que la température du pack batterie 1, captée par le capteur de température 45 demeure dans une plage prédéterminée (typiquement entre 25 et 35°C, par exemple), l'air ne circule, au niveau de la batterie 1, que dans le passage périphérique 21, en tant que fluide 25 (première période de temps). En sortie, une vanne 47 (telle qu'une vanne trois voies) fait passer l'air dans un circuit 49 qui l'envoie soit en recyclage (branche 51), soit vers l'environnement extérieur EXT ; branche 53, sous la commande 95 de l'unité 83 de traitement de données.

Si le capteur de température 45 relève par exemple une température du pack batterie 1 supérieure à 35°C, alors au moins deux parmi les passages 17/117 et 19/119 vont être activés: Les flux de fluide(s) 27 et/ou 29 vont ainsi intervenir, augmentant ainsi les échanges thermiques avec la batterie 1, dans son environnement immédiat (seconde période de temps). De la sorte, on optimisera les chances de gérer thermiquement le pack batterie 1.

Comme noté juste ci-avant, le passage périphérique de fluide 21, considéré globalement en tant moyen pour faire circuler, autour du pack batterie 1, du fluide arrivant par l'alimentation 25 pourra être formé de séries de canaux, tels que repérés 210a,210b,210c pour certains figure 4.

Ce « passage périphérique de fluide 21 » pourra ainsi être défini :
- comme schématisé figure 4, par des canaux intégrés dans des panneaux, - ou par un ou plusieurs tubes ou goulottes, de section par exemple circulaire ou rectangulaire.

Le matériau de constitution de ces panneaux, tubes ou goulottes pourra être neutre thermiquement, voire thermiquement conducteur, pour favoriser les échanges thermiques avec la batterie 1.

Il est toutefois possible d'affiner encore la gestion thermique, en recourant à des matériaux à changement de phase, dit MCP, comme déjà évoqué.

Ainsi, dans une réalisation comme illustré figure 4, et en complément de ce qui précède, l'assemblage précité peut aussi comprendre au moins une structure 61 (appelée aussi poche ci-après) comportant une enveloppe 63 fermée contenant un matériau 65 à changement de phase (MCP).

Si elle est prévue, une telle structure 61 sera utilement interposée entre le pack batterie 1 et l'isolant thermique 33 périphérique. Comme lui, la structure 61 pourra se présenter comme une série de panneaux, feuilles ou plaques.

Le MCP 65 pourra être dispersé dans une matrice 67 rigide structurante, de sorte à former un corps composite autoportant quelle que soit la phase du MCP (solide ou liquide notamment). Les canaux, tubes ou goulottes du passage périphérique de fluide 21 pourront être intégrés (canaux ; cf. figure 4) ou rapportés (tubes ou goulottes) dans la structure 61.

Avec une telle association entre du MCP, un fluide en circulation (alimentation 25) et un isolant thermique autour, on pourra créer un barrière thermique dynamique, le fluide permettant notamment de régénérer le MCP le moment venu.

Revenant maintenant sur la gestion thermique via le deuxième passage 19 ou 119 (s'il existe), la figure 10 illustre une réalisation où l'isolant thermique 33 n'est pas prévu entre l'extérieur (EXT) et les(s)dit(s) deuxième(s) passage(s), ici repérés 119a,119b. Il existe par contre autour du(des) passage(s) périphérique(s) 21.

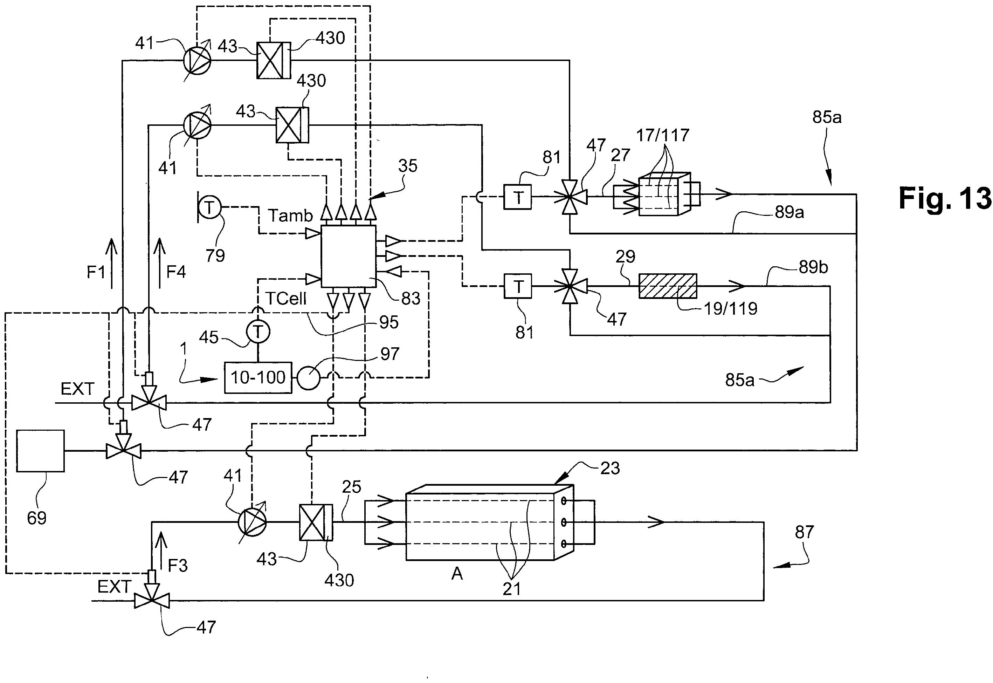

Un boîtier 71 géré thermiquement pourra former d'un seul bloc le fond 71a et certaines au moins des parois latérales. Coté supérieur, à l'opposé du fond 71a, un couvercle 72 isolant électrique, pouvant comprendre une couche d'isolant électrique 33 et traversé par les câbles électriques 73, couvrira utilement les bornes 31a, 31b 31a et fermera de ce côté le boîtier 71. Quoi qu'il en soit, ledit deuxième passage de fluide passera utilement :
- entre deux plaques 67a, 67b (figure 4) thermiquement conductrices, ou
- entre deux séries de plaques thermiquement conductrices 67c, 67d (figure 10) définissant alors plusieurs dits deuxièmes passages de fluide, tels que 119a, 119b, agencés en parallèle. Ce deuxième passage 19/119 de fluide présentera d'autant plus son intérêt si, à la différence des premier passage 17/117 et passage périphérique 21, il peut permettre de faire circuler un liquide, tel que de l'eau issu du circuit d'eau du véhicule 29 et donc d'une source d'eau 69, comme dans l'exemple de la figure 13.

D'autant plus avec un liquide, le deuxième passage 17/117 de fluide sera avantageusement, avec lesdites plaques 67a, 67b ou 67c, 67d, disposé sous le pack batterie 1, comme dans les exemples des figures 1,3,4.

Dans l'exemple de la figure 10, le pack batterie 1 peut donc être logé dans un boîtier 71 qui sera fermé à l'avant (AV) et à l'arrière (AR) par des parois pouvant être traversées au moins par les alimentations 25,27,29 (entrées d'un côté, sorties de l'autre), puisque dans l'exemple les trois séries de passages 21/117/119a-119b sont prévues.

Dans l'exemple de la figure 4, le pack batterie 1 est aussi logé dans un boîtier ; mais ce boîtier est ouvert en face horizontale supérieure, ici pour le passage des câbles électriques 73 (non représentés ; voir figure 7) prévus pour l'alimentation électrique des cellules 10.

Concernant les plaques thermiquement conductrices, telles que 67a, 67b (figure 4), elles pourront s'étendre, sensiblement horizontalement, au-delà de la zone du pack batterie 1.

Ainsi, la plaque thermiquement conductrice inférieure, telle que 67b, pourra utilement servir (aussi) de plaque de structure et/ou anti-gravillonnage (voir figure 9) en étant positionnée en face inférieure du véhicule, juste au-dessus du sol 75.

La plaque thermiquement conductrice inférieure 67b sera alors métallique.

Revenant sur le(s) premier(s) passage(s) 17/117, on notera que l'espace 15 inter-cellules, ou 115 entre deux groupes de cellules successifs, pourra être plus ou moins fonctionnalisé. Ainsi, il pourra d'abord être traversé, à coeur, entre deux cellules ou groupes de cellules par un(des) dit(s) premier(s) passage(s) 17/117 de fluide.

En alternative ou en complément, on pourra interposer :
- de l'isolant thermique 33, et/ou
- des structures 61 formant des panneaux contenant du MCP ; voir figure 2.

Si des telles structures 61 sont prévues, il est proposé, pour favoriser la régulation thermique via le MCP et comme schématisé figure 4 :
- qu'en face d'une dite cellule ou d'un dit groupe de cellules, la ou chaque structure 61 soit en contact contre la cellule ou le groupe de cellules, sans circulation ventilée de fluide entre eux, et/ou
- que la ou chaque structure 61 présente, en face d'une cellule ou d'un dit groupe de cellules, une surface 610 pleine, continue, pour un échange thermique non-discret avec elle(s).

Si, dans ledit espace 15/115, de l'isolant thermique 33 est interposé, il le sera entre au moins deux dites structures 61 successives, pour contrer les transferts thermiques entre (groupes de) cellules.

La présentation structurelle de l'assemblage de l'invention étant essentiellement faite, on va maintenant davantage présenter les circuits qui peuvent l'intégrer et leurs son fonctionnements.

Les figures 11-13, mais aussi 1 et 3, sont alors en particulier concernées.

On y a déjà noté la présence, utile à la gestion thermique des cellules compte tenu de leurs gammes de température optimale de fonctionnement, de dispositifs d'apport de calories ou de frigories 43 placés en échange thermique avec l'un au moins desdits fluides, tels que le sont les échangeurs situés donc chacun en amont de l'échange thermique considéré avec les cellules.

Ainsi, on pourra adapter la température de ce fluide (alimentation 25 et/ou 27 et/ou 29) en fonction :
- de l'échange thermique à réaliser via les passages 17/117 et/ou 19/119 et/ou 21, et/ou
- de l'état dans lequel il est souhaité que soit le MCP 65.

En alternative ou complément à un échangeur, on pourra prévoir, en tant que dispositif 43 d'apport de calories ou de frigories, l'un au moins parmi une résistance chauffante, une interconnexion avec un dispositif 77 d'air conditionné du véhicule, un déshumidificateur 430. Chaque circuit intégrant un assemblage conforme à l'invention comprend aussi plusieurs vannes 47 placées sous le contrôle des moyens 35 précités de commande.

Ces moyens 35 de commande des vannes comprennent, de préférence en combinaison et connectés à une unité 83 (voir ci-après) :
- au moins un (dit premier) capteur 45 de température prévu pour capter la température sur ou à proximité d'au moins une dite cellule 10 ou d'au moins un dit groupe 100 de cellules,
- au moins un deuxième capteur 79 de température pour capter la température de l'environnement extérieur (EXT/39) du véhicule, et
- au moins un troisième capteur 97 pour acquérir des données relatives à la profondeur de décharge (DOD) de la batterie, et/ou à l'état de charge de la batterie (SOC), et
- des moyens 81 d'actionnement des vannes 47.

On appelle « troisième capteur » 97 tout moyen permettant d'acquérir le DOD et/ou le SOC de la batterie (donc de tout ou partie de ses cellules ou groupes de cellules), soit son niveau de charge.

Ainsi :
- l'acquisition de l'état de charge SOC pourra se faire par la méthode OCV (Open Circuit Voltage ou Tension en circuit ouvert),
- ce troisième capteur 97 pourra comprendre ou être défini par un système de contrôle des batteries d'accumulateurs (Battery Management System ou BMS en anglais),
- un moniteur de batterie pouvant détecter non seulement la tension de la batterie mais aussi calculer les courants de charge et de décharge pourra être utilisé. L'intégration de ces courants permettra au moniteur de batterie de calculer l'état de charge de la batterie. Le moniteur de batterie pourra mesurer en permanence le débit de courant qui entre ou qui sort de la batterie. L'intégration de ce courant au fil du temps fournira à l'unité 83 de traitement de données (voir ci-après) le montant net d'Ah ajouté ou tiré.

Chaque circuit intégrant un assemblage conforme à l'invention comprendra en effet une unité 83 de traitement de données, cette unité étant connectée auxdits premier et deuxième capteurs 45,79 de température, audit troisième capteur 97, et auxdits moyens 81 d'actionnement des vannes.

Une approche pertinente en termes d'efficacité de gestion thermique de la batterie 1, avec anticipation, pourra alors amener à ce que certaines au moins des actions sur les vannes tiennent compte :
- de données de température (Tcell) au moins du premier capteur 45 de température, au moins pendant ladite première période de temps,
- de données de température (Tamb) au moins du deuxième capteur 79 de température, au moins pendant ladite deuxième période de temps.

Ainsi, on pourra privilégier une gestion prédictive (anticipée) de la température de la batterie pendant ladite première période de temps et, ensuite, si cela n'est pas encore suffisant, piloter la batterie d'abord à partir (au moins) de ses données de température, ceci pendant donc ladite deuxième période de temps.

De préférence, les données issues du « troisième capteur » 97 pour l'acquisition du DOD et/ou du SOC seront fournies en permanence, dès lors que la batterie est active, c'est-à-dire en charge électrique et/ou en décharge électrique, les deux pouvant être concomitants.

Lorsque l'unité 83 de traitement de données fournira au calculateur central du véhicule des données de gestion prédictive anticipant une recharge rapide de la batterie 1, par exemple sur une borne de recharge rapide d'autoroute, on pourra prévoir que, quelques minutes avant, l'unité 83 de traitement de données soit commandée par ce calculateur central pour piloter un abaissement de la température des cellules 10 de la batterie 1 en fonction :
- de la température extérieure, via le capteur 79 (on pourra avoir défini un(des) seuil(s) de température(s) minimum et/ou maximum),
- des états DOD et/ou SOC acquis par le troisième capteur 97.

Pour réduire alors la température des cellules 10, alors qu'elles sont actives, l'unité 83 de traitement de données commandera au moins une circulation de fluide dans l'un au moins desdits premier passage 17/117, deuxième passage 19/119 et passage périphérique 21, ceci donc pendant ladite première période de temps. Et ce pourra n'être que, si le logiciel entré dans l'unité 83 de traitement de données conclut que la réduction de la température à l'issue de cette première période de temps est insuffisante par rapport à un seuil prédéterminé qu'au moins deux desdites première, deuxième et autre alimentations en fluide seront commandées, pendant donc une dite seconde période de temps.

Comme déjà mentionné, il est prévu dans l'invention que les moyens 35 de régulation de l'écoulement du(des) fluide(s) en jeu agissent pour assurer une circulation de fluide en échange thermique :
- via l'une au moins de ces première, deuxième et autre alimentations 25,27,29 en fluide, pendant une première période de temps, et
- via au moins deux desdites première, deuxième et autre alimentations en fluide, pendant une seconde période de temps, laquelle est bien sûr postérieure à, et donc différente de, la première période de temps.

Même s'il n'y a donc a priori pas de préférence stricte entre les échanges thermiques à établir:
- entre le(s) fluide(s) passant dans ledit circuit et
- les passages 17/117 ; 19/119 et 21 en circulation,
on pourra préférer, pendant la première période de temps, faire circuler le(s) fluide(s) au moins dans les passages 17/117 ou 21.

Dans ce cas, ce n'est que lors de la seconde période de temps postérieure que l'on fera faire circuler le(s) fluide(s) au moins dans deux les passages 17/117 et 21, ou 17/117 et 19/119, ou 21 et 19/119.

Et éventuellement dans une troisième période de temps encore postérieure, on pourrait faire circuler le(s) fluide(s) dans les trois passages 17/117, 19/119 et 21.

Ainsi, c'est un critère de température issu de l'un au moins des capteurs 45,79 qui prévaudra pour initier chaque période de temps, voire aussi la terminer.

Tant pour prévenir les effets de l'environnement extérieur 39 que pour éviter les emballements du pack batterie 1 en cas de surchauffe et/ou pour bien le réguler dans la plage préférée de fonctionnement des cellules, on pourra toutefois préférer, comme illustré figures 11-13, qu'après la pompe ou ventilateur 41, dans le sens de la circulation de fluide d'amont vers l'aval (flèches), on trouve d'abord lesdits passages périphériques 21 puis lesdits premier passage 17/117 et/ou deuxième passage 19/119 de fluide.

Comme on l'a compris :
- autant sont prévus :
   -- trois passages, ou séries de passages, (17/117,19/119,21) d'échange thermique entre fluide et cellules 10 ou groupes de cellules 100, et
   -- trois alimentations 27,29, 25 en fluide(s), respectivement,
- autant il pourra être utilisé un ou plusieurs fluides à faire circuler dans ces passages, ou séries de passages.

A titre d'exemples privilégiés, quatre cas sont plus particulièrement présentés ci-après, en liaison avec les figures 1,3 et 11-13.

D'abord, sur le circuit 85 de la figure 11 un seul fluide, tel que de l'air, F1 est utilisé et fourni aux trois alimentations 27, 29, 25 en fluide.

Si l'on suppose donc de l'air comme fluide, cet air est prélevé de l'extérieur (EXT). Le ventilateur 41 le fait circuler vers le dispositif 43 et si nécessaire le déshumidificateur 430. Dans le dispositif 43, l'air reçoit des calories ou des frigories, en échange thermique avec un fluide F2 (ceci n'a pas été reproduit sur les autres figures, sauf figure1, pour ne pas surcharger).

En tant qu'alimentation 25 en entrée des passages 21, le fluide F1 est ainsi admis à une température adaptée à l'apport de calories ou frigories attendu pour la gestion thermique du pack batterie 1, à cette étape.

Par exemple si le capteur 79 détecte une température extérieure (Tamb) d'au moins 30°C, on pourra prévoir que soit automatiquement enregistré dans la mémoire du calculateur (ou de l'unité 83 de traitement de données) une activation programmée de l'alimentation 25 en entrée des passages 21, pendant donc ladite première période de temps, laquelle pourra par exemple être celle permettant, plus tard, quand Tamb détectée est ≤ 15°C par exemple, d'assurer une recharge du MCP 65 et donc qu'il soit à l'état solide (hypothèse d'un MCP 65 prévu pour passer de solide à liquide vers 25-28°C, et inversement) avant que la température extérieure :
- devienne excessive (pays chauds ou été ; Tamb ≥ 35°C, par exemple),
- et vienne impacter thermiquement le boîtier 71.

Si maintenant le(s) capteur(s) 45 détecte(nt) une température de la batterie (Tcell) de plus de 29°C, on pourra prévoir que soit automatiquement activée deux alimentations en fluide, telles que celles 27 et 29, ou 27 et 25, pendant donc ladite deuxième période de temps, laquelle pourra par exemple être celle permettant de faire redescendre à moins de 27°C la température de la batterie (Tcell) (ou d'une au moins de ses cellules) détectée par le(s) capteur(s) 45.

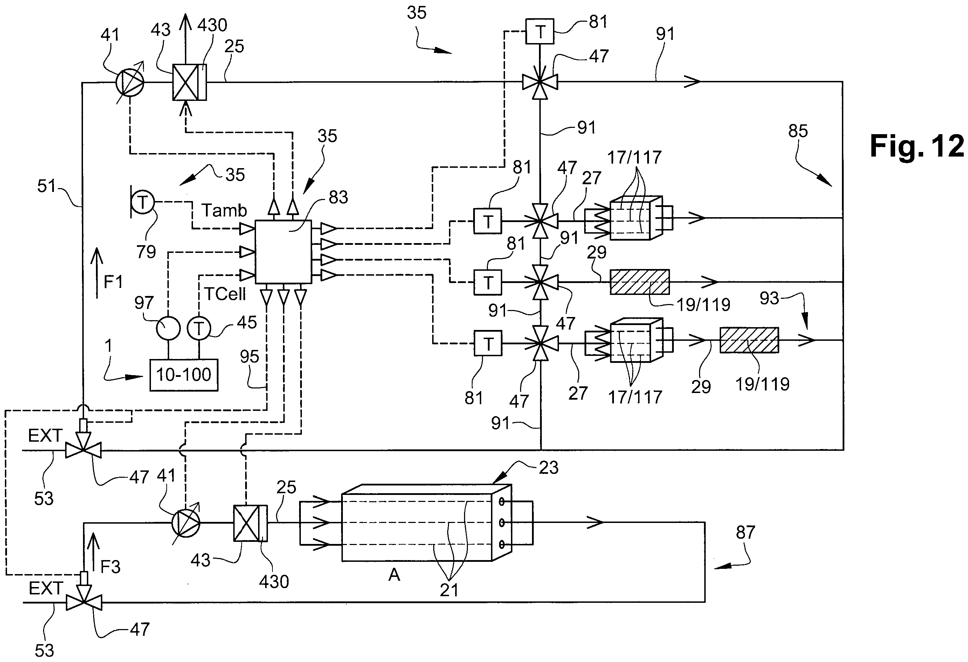

On notera que cet exemple pourrait aussi s'appliquer à des solutions « deux fluides « ou « trois fluides », comme celles respectivement des figures 12 et 13.

Dans la solution de la figure 11, en fonction des données de température issues du ou des capteurs 45 et/ou 79 et donc de la période de temps (première ou deuxième période) considérée, l'unité 83 de traitement de données pourra aussi commander :
- l'échange dans le dispositif 43 (débit de fluide F2, température d'entrée, typiquement), ceci au moins en fonction des données fournies au moins par le capteur 79 de température extérieure, et/ou
- le ventilateur (ou la pompe le cas échéant) 41 de façon que le débit de fluide F1 convienne. Dans la solution de la figure 12, on trouve non plus un mais deux fluides F1, F3 ; de l'air dans l'exemple.

Par rapport à la solution précédente, la gestion thermique du pack batterie 1 via l'alimentation 25 en entrée des passages 21 (fluide F1) est réalisée sur un circuit 87 indépendant de celui 85 des alimentations et passages 27 ;17/117 et 29 ;19/119, lesquels peuvent demeurer identiques à la solution précédente de la figure 11.

Sur le circuit indépendant 87, on trouve donc :
- une liaison fluide 53 avec l'extérieur,
- un ventilateur 41 pour une circulation du fluide vers un dispositif 43 d'apport de calories ou frigories, puis le(s) passage(s) 21 avec, en sortie, un possible bouclage vers une vanne 47 pouvant permettre soit de recycler une partie au moins du fluide F3, soit son évacuation vers l'extérieur, et
- les connexions avec l'unité 83 de traitement de données.

On pourra donc dissocier l'échange thermique dans les passages 17/117 et/ou 19/119 de celui dans le(s) passage(s) 21.

Dans la solution de la figure 13, on trouve trois fluides F1, F3, F4, dont deux au moins différents: de l'air (F1,F3) et de l'eau (F4) dans l'exemple.

Le circuit indépendant 87 (fluide F3, passage(s) 21) demeure. Le circuit 85 est dédoublé en 85a (fluide F1, passage(s) 17/117) et 85b (fluide F4, passage(s) 19/119).

Ainsi, sur chaque circuit, un ventilateur 41 fait circuler le fluide vers le dispositif 43 (échange thermique avec un fluide F2) et si nécessaire le déshumidificateur 430. En tant qu'alimentation 25,27 ou 29, en entrée des passages 21, 17/117, 19/119, respectivement, le fluide F1 est ainsi admis à une température adaptée à l'apport de calories ou frigories attendu pour la gestion thermique considéré à cette étape.

Sur chaque circuit 85a, 85b, une vanne 47 trois voies, pilotée par l'unité 83 de traitement de données, comme déjà expliqué, oriente tout ou partie du flux F1 ou F4 vers :
- l'entrée des passages 17/117 ou 19/119, respectivement,
- avec, dans chaque cas, une possible dérivation vers une branche bypass 89a ou 89b.

Sur les figures 11-13, des pointillés sur les circuits (branche 49 figure 11) après les passages 21, 17/117, 19/119 indiquent un possible recyclage au moins partiel du fluide considéré via une vanne 47 :
- qui peut être identique aux autres,
- qui communique avec l'air extérieur ou une source de liquide 69, et
- qui peut aussi être pilotée par l'unité 83 de traitement de données.

Sur l'un des circuits à un ou deux fluides (voir pour l'exemple le circuit 85 monofluide ; cf. figure 11), où on aura(it) privilégié le passage périphérique 21 de fluide avant, soit les passages 17/117 et/ou 19/119, soit de possibles dérivations vers des branches bypass respectives 91, il pourra être prévu que la sortie dudit passage périphérique 21 de fluide communique, avec l'entrée :
- du premier passage 17/117 de fluide, et/ou
- du deuxième passage 19/119 de fluide,
de sorte que du fluide à y faire circuler soit au moins en partie commun.

Ainsi, on pourra associer au moins un double étage d'échange thermique (dans deux passages successifs parmi les passages 17/117 ; 19/119 et 21) avec un fluide commun.

Faire circuler, (sensiblement) à la température de sortie du dispositif 43 d'apport de calories ou frigories, le fluide F1 ou F3 d'abord dans le(s) passage(s) 21 (cf. solution un fluide, comme figure 11) permettra d'assurer d'abord une isolation thermique renforcée du vis-à-vis de l'extérieur 39 du véhicule.

Si l'on préfère faire circuler, toujours (sensiblement) à la température de sortie du dispositif 43 d'apport de calories ou frigories, le fluide F1 d'abord dans le(s) passage(s) 17/117 (cf. solution deux fluides, comme figure 12) on pourra alors plutôt assurer d'abord une action anti-emballement des cellules, évitant ainsi une vaporisation de l'électrolyte.

On aura noté que cette situation surviendra si, après le dispositif 43, le fluide F1 est dirigé vers la branche 93 du circuit pour circuler d'abord dans le(s) premier(s) passage(s) 17/117, puis dans le(s) deuxième(s) passage(s) 19/119 avant d'être recyclé ou expulsé vers l'extérieur 39 (fluide gazeux) ou encore récupéré dans un réservoir (liquide).

A noter à ce sujet, qu'en particulier si le fluide F1, F3 ou F4 est liquide, on aura avantage à ce que le(s) deuxième(s) passage(s) de fluide 19/119 communique(nt) avec un circuit de recyclage, pour réintroduire dans la deuxième alimentation 29 une partie au moins dudit fluide issu du passage précédent dans ce(s) deuxième(s) passage(s), après passage dans le dispositif 43 d'apport de calories ou de frigories.

Comme schématisé à titre d'exemple figures 1 et 3, on notera aussi que, dans une solution à deux ou trois fluides, comme par exemple figures 12 ou 13, le circuit indépendant 87 pourrait intégrer le(s) deuxième(s) passage(s) de fluide 19/119 en place du(des) passage(s) 21.

En sortie du(des) passage(s) 17/117, le fluide concerné serait soit recyclé, de nouveau vers l'alimentation 27 pour repasser dans le(s) premier(s) passage(s) 17/117, soit dirigé vers l'alimentation 25.

Dans les exemples ci-avant décrits en liaison avec les illustrations, seul un fluide passe dans les passages 17/117, 19/119 et/ou 21.

Toutefois, plusieurs fluides peuvent circuler sur un même côté.

Les figures 14 et 15 permettent d'illustrer une situation dans laquelle deux fluides au moins sont utilisés pour le refroidissement ou le réchauffe de la batterie concernée. La figure 14 reprend l'intégralité du montage de la figure 12 et le complète.

Ainsi, on peut par exemple prévoir ce qui suit :
- un premier fluide 25 circule dans la barrière externe de la batterie (pourra s'étendre le long de plusieurs parois 23 extérieures pourvues de passage(s) périphérique(s) 21) et un second fluide circule dans les parties inter éléments et/ou en sous-élément, sur au moins une face : second fluide dans le(s) premier(s) de fluide passage(s) 17/117 et/ou dans le(s) deuxième(s) passage(s) de fluide 19/119.
- en outre, comme schématisé figure 15, un ou deux fluides sont, simultanément ou non, mis en circulation dans un groupe de passages, 17/117, 19/119 et/ou 21.

Ainsi, si l'on imagine :
- la paroi 50 de la figure 15 comme correspondant à l'une quelconque des parois précitées traversée par desdits passages 17/117, 19/119 et/ou 21 (paroi 61, 67a-67b, 67c-67d, 23...), et
- ces passages 17/117, 19/119 et/ou 21 repérés respectivement 52,54 pour deux groupes d'entre eux à chaque fois,
on pourra faire circuler un premier fluide 56 dans le premier groupe de passages 52 et/ou un second fluide 58 (différent du premier fluide 56) dans le second groupe de passages 54.

Le premier fluide 56 sera l'un des fluides des première, deuxième ou dite autre alimentation en fluide 25,27,29. Le second fluide 58 sera l'un des autres fluides de ces mêmes alimentations.

Les premier et second groupes de passages 52, 54 ne communiquant pas, les deux fluides d'alimentation 56,58 ne se mélangent pas.

Ainsi, les deux fluides d'alimentation 56,58 pourront être de natures différentes (air et eau glycolée, par exemple). La circulation pourra être pilotée par la température de batterie (capteur 45, moyens 81 d'actionnement des vannes et unité 83 de traitement de données, en particulier). La combinaison des deux fluides ou l'utilisation de l'un ou l'autre de ces fluides pourra dépendre du niveau de dissipation des cellules 10-100 qui induira une élévation de température.

On pourra convenir qu'en fonctionnement normal on puisse faire circuler par exemple uniquement de l'air dans le second groupe de passages 54 et qu'en fonctionnement critique (surchauffe) ou de charge rapide de la batterie 1, de l'eau glycolée circule dans le premier groupe de passages 52.

Pour l'efficience de la solution (augmentation des échanges thermiques et des surfaces d'échange en jeu), l'un au moins desdits passages ou groupe de passages 52,54 est bordé par, et est donc au contact avec, un matériau à changement de phase 60 avec lequel il est ainsi en échange thermique quand du fluide circule.

Dans l'exemple, deux panneaux contenant du MCP 60 définissent, sur deux faces opposées, les limites respectivement supérieure et inférieure d'un conduit unique de passage de fluide formant ledit second groupe de passages 54.

Le premier groupe de passages 52 est, quant à lui, défini par une série de tubes disposés en parallèle dans la paroi 50.

Les alimentions en fluides différents puissent y circuler sans se mélanger entre eux.

La paroi 50 peut elle-même contenir du MCP, en substitution ou en complément du MCP 60. Sur la figure 14, des vannes 470, placées en aval des vannes 47 d'accès aux passages 17/117 ;19/119, permettent, dans l'exemple, via des piquages 471 et une autre vanne 473 trois voies située en entrée des passages 21, d'amener l'un ou l'autre des fluides d'alimentation 27,29 en entrée des passages 21.

La vanne 473 est située en aval du dispositif 43 d'apport de calories ou de frigories 43 du circuit indépendant 87.

Les vannes 470,473 sont commandées par les moyens 81 d'actionnement des vannes et par l'unité 83 de traitement de données, comme les autres vannes 47.

Ainsi, dans cet exemple, et en supposant le(s) passage(s) 21 comme correspondant au second groupe de passages 54 et la paroi 23 comme correspondant à la paroi 50 pourvue du premier groupe de passages 52, on va pouvoir obtenir:
- que pendant une première période de fonctionnement, l'un des fluides d'alimentation 27,29 approvisionne les passages 54/21, et
- que pendant une seconde période de fonctionnement, l'autre des fluides d'alimentation 27,29 ou le fluide d'alimentation 25 approvisionne les passages 52 ajoutés.

Le montage de la figure 11, pourvu des compléments de la figure 14 par rapport à la figure 12, aurait aussi pu servir de base à la réalisation d'une telle solution où plusieurs fluides peuvent circuler sur un même côté.

## Revendications

1. Assemblage comprenant :
- plusieurs cellules (10) ou groupes (100) de cellules d'une batterie électrique (1) de véhicule, dont:
-- une première cellule et une deuxième cellule séparées l'une de l'autre par un espace (15), ou
-- un premier groupe et un deuxième groupe de cellules séparés l'un de l'autre par un espace (115),
- l'assemblage comprenant en outre au moins deux parmi un premier passage (17,117) de fluide, un deuxième passage (19,119) de fluide et un passage périphérique (21) de fluide,
-- le premier passage (17,117) de fluide passant dans ledit espace (15,115), et situé entre deux premiers côtés (11a,13 ;111a,113a) opposés se faisant face :
--- de la première cellule et de la deuxième cellule (11,13) respectivement, ou
--- des premier et deuxième groupes (111,113) de cellules respectivement, le premier passage (17,117) étant relié à une première alimentation (27) en fluide à faire circuler en échange thermique avec les première et deuxième cellules ou les premier et deuxième groupes de cellules,
-- le deuxième passage (19,119) de fluide étant situé sur des deuxièmes côtés (11b,111b,113b) :
--- de la première cellule et de la deuxième cellule respectivement, ou
--- des premier et deuxième groupes de cellules respectivement,
le deuxième passage (19,119) étant en outre relié à une deuxième alimentation (29) en fluide à faire circuler en échange thermique avec les première et deuxième cellules ou avec les premier et deuxième groupes de cellules, et,
-- le passage périphérique (21) de fluide étant situé autour des cellules (10) ou groupes (100) de cellules, en échange thermique avec elles/eux, sur des côtés (643) autres que lesdits premiers côtés (11a,13;111a,113a) des cellules ou groupes de cellules, respectivement, ledit passage périphérique (21) étant relié à une autre alimentation (25) en fluide à faire circuler en échange thermique avec lesdites cellules ou groupes de cellules, et
- l'assemblage comprenant en outre un isolant thermique (33) situé de telle sorte que ledit deuxième passage (19,119) et/ou le passage périphérique (21) est interposé entre l'isolant thermique (33) et :
-- au moins les première et deuxième cellules, ou
-- au moins les premier et deuxième groupes (640') de cellules.

2. Assemblage comprenant :
- plusieurs cellules ou groupes de cellules d'une batterie électrique (1) de véhicule, dont:
-- une première cellule et une deuxième cellule séparées l'une de l'autre par un espace (15), ou
-- un premier groupe et un deuxième groupe de cellules séparés l'un de l'autre par un espace (115),
- l'assemblage comprenant en outre :
-- une structure (61) contenant un matériau à changement de phase (65), la structure étant disposée entre deux premiers côtés (111a,113a) opposés se faisant face :
--- de la première cellule et de la deuxième cellule respectivement, ou
--- des premier et deuxième groupes de cellules respectivement,
-- ou une autre dite structure (61) contenant un matériau à changement de phase (65) disposée autour des cellules (10) ou groupes (100) de cellules,
- l'assemblage comprenant en outre au moins deux parmi un premier passage (17,117) de fluide, un deuxième passage (19,119) de fluide et un passage périphérique (21) de fluide,
-- le premier passage (17,117) de fluide passant dans ledit espace (15,115), le premier passage étant relié à une première alimentation (27) en fluide à faire circuler en échange thermique avec le matériau à changement de phase (65) de la structure (61),
-- le deuxième passage (19,119) de fluide étant situé sur des deuxièmes côtés (11b;111b,113b) :
--- de la première cellule et de la deuxième cellule (11,13) respectivement, ou
--- des premier et deuxième groupes (111,113) de cellules respectivement,
le deuxième passage étant relié à une deuxième alimentation (29) en fluide à faire circuler en échange thermique avec les première et deuxième cellules ou les premier et deuxième groupes de cellules,
ladite autre dite structure (61) contenant, le cas échéant, un matériau à changement de phase (65) disposée autour des cellules (10) ou groupes (100) de cellules,
-- le passage périphérique (21) de fluide étant situé dans ladite autre structure (61),
ledit passage périphérique étant relié à une autre alimentation (25) en fluide à faire circuler en échange thermique avec le matériau à changement de phase de ladite autre structure (61), sur des côtés (100d,111d) autres que lesdits premiers côtés des cellules ou groupes de cellules, respectivement, et
- l'assemblage comprenant en outre un isolant thermique (33) situé de telle sorte que ledit deuxième passage (19,119) ou passage périphérique (21) est interposé entre l'isolant thermique (33) et :
-- au moins les première et deuxième cellules, ou
-- au moins les premier et deuxième groupes de cellules.

3. Assemblage selon la revendication 1 ou 2, qui comprend en outre des moyens (35,41,45,47,79,81,83,97) de régulation d'écoulement de fluide(s) agissant pour assurer une circulation de fluide en dit échange thermique :
- via l'une au moins des première, deuxième et autre alimentations en fluide, pendant une première période de temps, et
- via au moins deux des première, deuxième et autre alimentations en fluide, pendant une seconde période de temps.

4. Assemblage selon la revendication 1 ou 2, qui comprend en outre des moyens (35,41,45,47,79,81,83,97) de régulation d'écoulement de fluide(s) agissant pour assurer une circulation de fluide en dit échange thermique et comprenant :
- des vannes (47) sur les première, deuxième et/ou autre alimentations (25,27,29) en fluide, et
- des moyens (45,79,81,83,97) de commande des vannes agissant en fonction de données de température de dites cellules (10) ou groupes (100) de cellules et/ou de données relatives à la charge ou la décharge de la batterie.

5. Assemblage selon l'une quelconque des revendications précédentes, dans lequel :
- entre deux dits premiers côtés (11a,13 ;111a, 113a) opposés se faisant face, ou
- sur lesdits deuxièmes côtés (11b,111b,113b), ou
- sur lesdits côtés (100d,111d) autres que les premiers côtés des cellules ou groupes de cellules, respectivement,
sont disposés respectivement plusieurs premiers passages (17,117) de fluides, ou plusieurs deuxièmes passages (19,119) de fluides, ou plusieurs passages périphériques (21) de fluides, séparés les uns des autres, de façon que des fluides différents puissent y circuler sans se mélanger entre eux.

6. Assemblage selon la revendication 5, dans lequel l'un au moins lesdits plusieurs premiers passages (17,117) de fluides, ou plusieurs deuxièmes passages (19,119) de fluides, ou plusieurs passages périphériques (21) de fluides est disposé au contact d'un matériau à changement de phase (60) avec lequel il est en échange thermique quand du fluide circule.

7. Assemblage selon l'une quelconque des revendications précédentes, qui comprend en outre un dispositif (43) d'apport de calories ou de frigories avec lequel l'un au moins desdits fluides est placé en échange thermique, en amont de l'échange thermique avec les cellules (10) ou groupes (100) de cellules, de façon à adapter la température dudit fluide.

8. Assemblage selon la revendication 2 seule ou combinaison avec l'une quelconque des revendications 3 à 6, qui comprend en outre un dispositif (43) d'apport de calories ou de frigories placé en échange thermique avec l'un au moins desdits fluides, en amont de l'échange thermique avec les cellules (10) ou groupes (100) de cellules, de façon à adapter la température dudit fluide en fonction de l'état dans lequel il est souhaité que soit le matériau (65) à changement de phase.

9. Assemblage selon l'une quelconque des revendications précédentes, dans lequel ledit passage périphérique (21) de fluide communique avec :
- le premier passage (17,117) de fluide, et/ou
- le deuxième passage (19,119) de fluide,
de sorte que du fluide à y faire circuler est au moins en partie commun.

10. Assemblage selon l'une quelconque des revendications précédentes qui comprend, pour la gestion thermique de la batterie (1), plusieurs circuits de régulation thermique dont :
- un premier circuit qui comprend ledit au moins un premier passage (17,117) de fluide et qui passe entre deux cellules adjacentes,
- un second circuit qui comprend ledit passage périphérique (21) de fluide et qui passe autour d'un empilement des cellules, et
- un troisième circuit qui comprend ledit deuxième passage (19,119) de fluide et qui passe :
-- sur une face de cellule(s) autre que celle où passe le premier circuit (17,117),
-- voire possiblement aussi sur une face de cellule(s) autre que celle où passe le second circuit (21).

11. Véhicule comprenant l'assemblage selon la revendication 4 seule ou combinaison avec l'une quelconque des revendications 5 à 9, dans lequel les moyens (45,79,81,83,97) de commande des vannes comprennent au moins:
- un premier capteur (45) de température pour capter la température sur ou à proximité desdites cellules ou groupes de cellules, et
- un deuxième capteur (79) de température pour capter la température depuis un environnement extérieur (39) du véhicule,
- des moyens (81) d'actionnement des vannes, et
- une unité (83) de traitement de données connectée auxdits premier et deuxième capteurs de température et auxdits moyens d'actionnement des vannes, pour que certaines au moins des actions sur les vannes tiennent compte de données de température du premier capteur (45) de température et/ou du deuxième capteur (79) de température.

12. Véhicule selon la revendication 11, dans lequel l'unité (83) de traitement de données agit pour assurer une circulation de fluide en dit échange thermique :
- via l'une au moins des première, deuxième et autre alimentations (27,29,25) en fluide, pendant une première période de temps, et
- via au moins deux des première, deuxième et autre alimentations (27,29,25) en fluide, pendant une seconde période de temps, et tient compte :
- de données de température au moins du deuxième capteur (79) de température pendant la première période de temps au moins,
- de données de température au moins du premier capteur (45) de température pendant la deuxième période de temps au moins.

13. Véhicule selon la revendication 11 ou 12, dans lequel :
- les moyens (45,79,81,83,97) de commande des vannes comprennent en outre au moins un troisième capteur (97) pour acquérir des données relatives à la profondeur de décharge (DOD) de la batterie, et/ou à l'état de charge (SOC) de la batterie, et
- l'unité (83) de traitement de données est connectée audit au moins un troisième capteur (97), pour que certaines au moins des actions sur les vannes tiennent compte de données acquises par le troisième capteur (97).

14. Véhicule disposé dans un environnement extérieur (39) et comprenant l'assemblage selon la revendication 4 seule ou combinaison avec l'une quelconque des revendications 5 à 9, dans lequel les moyens (45,79,81,83,97) de commande des vannes comprennent :
- au moins un capteur (97) pour acquérir des données relatives à la profondeur de décharge (DOD) de la batterie, et/ou à l'état de charge (SOC) de la batterie,
- des moyens (81) d'actionnement des vannes, et
- une unité (83) de traitement de données connectée audit au moins un capteur (97), pour que certaines au moins des actions sur les vannes (47) tiennent compte de données acquises par ledit capteur (97) d'acquisition des données relatives à la profondeur de décharge de la batterie, et/ou à l'état de charge de la batterie.

15. Véhicule selon l'une quelconque des revendications 11 à 14, qui comprend le deuxième passage (19,119) de fluide, lequel passe entre deux plaques (67a,67b) thermiquement conductrices, ou deux séries de plaques thermiquement conductrices (67c,67d) définissant plusieurs dits deuxièmes passages (19,119) de fluide agencés en parallèle,
- ledit fluide (15) à faire circuler dans le premier passage (17,117) de fluide est un premier fluide,
- ledit fluide (15) à faire circuler dans le deuxième passage (19,119) de fluide est un deuxième fluide différent du premier fluide, et,
- les premier et deuxième fluides circulent dans des circuits (85,87) séparés.

16. Véhicule selon la revendication 15, dans lequel :
- le deuxième passage (19,119) de fluide et lesdites plaques (67a,67b ; 67c,67d) sont disposés sous la batterie électrique, et
- ledit fluide, ou l'un au moins des fluides, à faire circuler dans le(s) deuxième(s) passage(s) (19,119) de fluide(s) est un liquide.

17. Véhicule selon l'une quelconque des revendications 11 à 14, qui comprend :
- le deuxième passage (19,119) de fluide, et
- au moins un recyclage dans lequel le deuxième passage (19,119) de fluide communique avec un circuit de recyclage, pour réintroduire dans la deuxième alimentation (29) une partie au moins dudit fluide issu du deuxième passage de fluide, après passage dans le dispositif (43) d'apport de calories ou de frigories de l'assemblage selon la revendication 5 ou 6.

18. Véhicule selon l'une quelconque des revendications 11 à 17, dans lequel :
- les moyens (35,41,45,47,79,81,83,97) de régulation d'écoulement de fluide(s) comprennent en outre au moins une pompe ou un ventilateur (41) pour la circulation du ou des fluide(s), et,
- dans lequel, après la pompe ou le ventilateur, dans le sens de la circulation de fluide d'amont vers l'aval, on trouve d'abord lesdits passages périphériques (21) puis lesdits premier passage et/ou deuxième passage de fluide, de façon que du fluide circule d'abord dans ladite autre alimentation (25) en fluide puis dans la première alimentation (27) en fluide et/ou dans la deuxième alimentation (29) en fluide.

## Patentansprüche

1. Anordnung, enthaltend:
- mehrere Zellen (10) oder Gruppen (100) von Zellen einer elektrischen Fahrzeugbatterie (1), darunter
-- eine erste Zelle und eine zweite Zelle, die durch einen Zwischenraum (15) voneinander getrennt sind, oder
-- eine erste Gruppe und eine zweite Gruppe von Zellen, die durch einen Zwischenraum (115) voneinander getrennt sind,
- wobei die Anordnung ferner zumindest zwei aus einem ersten Fluiddurchgang (17, 117), einem zweiten Fluiddurchgang (19, 119) und einem umlaufenden Fluiddurchgang (21) umfasst,
-- wobei der erste Fluiddurchgang (17, 117) durch den Zwischenraum (15, 115) verläuft und sich zwischen zwei gegenüberliegenden ersten Seiten (11a, 13; 111a, 113a) befindet, die einander zugewandt sind, und zwar von
--- der ersten bzw. der zweiten Zelle (11, 13) oder
--- der ersten bzw. der zweiten Gruppe (111, 113) von Zellen, wobei der erste Durchgang (17, 117) mit einer ersten Fluidzuführung (27) für ein Fluid verbunden ist, das in Wärmeaustausch mit der ersten und der zweiten Zelle oder mit der ersten und der zweiten Gruppe von Zellen umgewälzt werden soll,
-- wobei der zweite Fluiddurchgang (19, 119) sich an zweiten Seiten (11b, 111b, 113b) befindet, und zwar von
--- der ersten Zelle bzw. der zweiten Zelle oder
--- der ersten bzw. der zweiten Gruppe von Zellen,
wobei der zweite Durchgang (19, 119) ferner mit einer zweiten Fluidzuführung (29) für ein Fluid verbunden ist, das in Wärmeaustausch mit der ersten und der zweiten Zelle oder mit der ersten und der zweiten Gruppe von Zellen umgewälzt werden soll, und
-- wobei der umlaufende Fluiddurchgang (21) um die Zellen (10) oder Gruppen (100) von Zellen herum in Wärmeaustausch mit diesen an anderen Seiten (643) als den ersten Seiten (11a, 13; 111a, 113a) der Zellen bzw. Gruppen von Zellen angeordnet ist, wobei der umlaufende Durchgang (21) mit einer weiteren Fluidzuführung (25) für ein Fluid verbunden ist, das in Wärmeaustausch mit den Zellen oder Gruppen von Zellen umgewälzt werden soll, und
- wobei die Anordnung ferner eine Wärmeisolierung (33) umfasst, die so angeordnet ist, dass der zweite Durchgang (19, 119) und/oder der umlaufende Durchgang (21) zwischen der Wärmeisolierung (33) und
-- zumindest der ersten und der zweiten Zelle oder
-- zumindest der ersten und der zweiten Gruppe (640') von Zellen angeordnet ist.

2. Anordnung, enthaltend:
- mehrere Zellen oder Gruppen von Zellen einer elektrischen Fahrzeugbatterie (1), darunter
-- eine erste Zelle und eine zweite Zelle, die durch einen Zwischenraum (15) voneinander getrennt sind, oder
-- eine erste Gruppe und eine zweite Gruppe von Zellen, die durch einen Zwischenraum (115) voneinander getrennt sind,
- wobei die Anordnung ferner umfasst:
-- eine Struktur (61), die ein Phasenwechselmaterial (65) enthält, wobei die Struktur zwischen zwei gegenüberliegenden ersten Seiten (111a, 113a) angeordnet ist, die einander zugewandt sind, und zwar von
--- der ersten Zelle bzw. der zweiten Zelle oder
--- der ersten bzw. der zweiten Gruppe von Zellen,
-- oder eine weitere Struktur (61), die ein Phasenwechselmaterial (65) enthält und um die Zellen (10) oder Gruppen (100) von Zellen herum angeordnet ist,
- wobei die Anordnung ferner zumindest zwei aus einem ersten Fluiddurchgang (17, 117), einem zweiten Fluiddurchgang (19, 119) und einem umlaufenden Fluiddurchgang (21) umfasst,
-- wobei der erste Fluiddurchgang (17, 117) durch den Zwischenraum (15, 115) verläuft, wobei der erste Durchgang mit einer ersten Fluidzuführung (27) für ein Fluid verbunden ist, das in Wärmeaustausch mit dem Phasenwechselmaterial (65) der Struktur (61) umgewälzt werden soll,
-- wobei der zweite Fluiddurchgang (19, 119) sich an zweiten Seiten (11b, 111b, 113b) befindet, und zwar von
--- der ersten Zelle bzw. der zweiten Zelle (11, 13) oder
--- der ersten bzw. der zweiten Gruppe (111, 113) von Zellen,
wobei der zweite Durchgang mit einer zweiten Fluidzuführung (29) für ein Fluid verbunden ist, das in Wärmeaustausch mit der ersten und der zweiten Zelle oder mit der ersten und der zweiten Gruppe von Zellen umgewälzt werden soll,
wobei die weitere Struktur (61) gegebenenfalls ein Phasenwechselmaterial (65) enthält und um die Zellen (10) oder Gruppen (100) von Zellen herum angeordnet ist,
-- wobei der umlaufende Fluiddurchgang (21) sich in der weiteren Struktur (61) befindet, wobei der umlaufende Durchgang mit einer weiteren Fluidzuführung (25) für ein Fluid verbunden ist, das in Wärmeaustausch mit dem Phasenwechselmaterial der weiteren Struktur (61) umgewälzt werden soll, und zwar an anderen Seiten (100d, 111d) als den ersten Seiten der Zellen bzw. Gruppen von Zellen, und
- wobei die Anordnung ferner eine Wärmeisolierung (33) umfasst, die so angeordnet ist, dass der zweite Durchgang (19, 119) oder der umlaufende Durchgang (21) zwischen der Wärmeisolierung (33) und
-- zumindest der ersten und der zweiten Zelle oder
-- zumindest der ersten und der zweiten Gruppe von Zellen angeordnet ist.

3. Anordnung nach Anspruch 1 oder 2, ferner umfassend Mittel (35, 41, 45, 47, 79, 81, 83, 97) zur Regulierung der Fluidströmung, die so wirken, dass sie eine Fluidströmung in Wärmeaustausch sicherstellen, und zwar
- über zumindest eine aus der ersten, der zweiten und der weiteren Fluidzuführung während eines ersten Zeitraums, und
- über zumindest zwei aus der ersten, der zweiten und der weiteren Fluidzuführung während eines zweiten Zeitraums.

4. Anordnung nach Anspruch 1 oder 2, ferner umfassend Mittel (35, 41, 45, 47, 79, 81, 83, 97) zur Regulierung der Fluidströmung, die so wirken, dass sie eine Fluidströmung in Wärmeaustausch sicherstellen, und umfassen:
- Ventile (47) an der ersten, der zweiten und/oder der weiteren Fluidzuführung (25, 27, 29) und
- Mittel (45, 79, 81, 83, 97) zum Ansteuern der Ventile, die in Abhängigkeit von Temperaturdaten der Zellen (10) oder Gruppen (100) von Zellen und/oder von Daten bezüglich der Ladung oder Entladung der Batterie wirken.

5. Anordnung nach einem der vorhergehenden Ansprüche, wobei
- zwischen zwei gegenüberliegenden ersten Seiten (11a, 13; 111a, 113a), die einander zugewandt sind, oder
- an den zweiten Seiten (11b, 111b, 113b) oder
- an den anderen Seiten (100d, 111d) als den ersten Seiten der Zellen bzw. Gruppen von Zellen
jeweils mehrere erste Fluiddurchgänge (17, 117) bzw. mehrere zweite Fluiddurchgänge (19, 119) bzw. mehrere umlaufende Fluiddurchgänge (21) angeordnet sind, die voneinander getrennt sind, so dass unterschiedliche Fluide darin strömen können, ohne sich miteinander zu vermischen.

6. Anordnung nach Anspruch 5, wobei zumindest einer der mehreren ersten Fluiddurchgänge (17, 117) oder der mehreren zweiten Fluiddurchgänge (19, 119) oder der mehreren umlaufenden Fluiddurchgänge (21) in Kontakt mit einem Phasenwechselmaterial (60) angeordnet ist, mit dem er in Wärmeaustausch steht, wenn ein Fluid strömt.

7. Anordnung nach einem der vorhergehenden Ansprüche, ferner umfassend eine Vorrichtung (43) zur Wärme- oder Kältezufuhr, mit der zumindest eines der Fluide in Wärmeaustausch steht, und zwar vor dem Wärmeaustausch mit den Zellen (10) oder Gruppen (100) von Zellen, um die Temperatur des Fluids anzupassen.

8. Anordnung nach Anspruch 2 allein oder in Kombination mit einem der Ansprüche 3 bis 6, ferner umfassend eine Vorrichtung (43) zur Wärme-oder Kältezufuhr, die in Wärmeaustausch mit zumindest einem der Fluide steht, und zwar vor dem Wärmeaustausch mit den Zellen (10) oder Gruppen (100) von Zellen, um die Temperatur des Fluids in Abhängigkeit von dem Zustand anzupassen, in dem das Phasenwechselmaterial (65) sein soll.

9. Anordnung nach einem der vorhergehenden Ansprüche, wobei der umlaufende Fluiddurchgang (21) in Verbindung steht mit:
- dem ersten Fluiddurchgang (17, 117) und/oder
- dem zweiten Fluiddurchgang (19,119),
so dass darin umzuwälzendes Fluid zumindest teilweise gemeinsam vorliegt.

10. Anordnung nach einem der vorhergehenden Ansprüche, das zum Thermomanagement der Batterie (1) mehrere Kreisläufe zur thermischen Regulierung umfasst, darunter:
- einen ersten Kreislauf, der den zumindest einen ersten Fluiddurchgang (17, 117) umfasst und zwischen zwei benachbarten Zellen verläuft,
- einen zweiten Kreislauf, der den umlaufenden Fluiddurchgang (21) umfasst und um einen Stapel von Zellen herum verläuft, und
- einen dritten Kreislauf, der den zweiten Fluiddurchgang (19, 119) umfasst und
-- an einer anderen Seite der Zelle(n) als derjenigen verläuft, an der der erste Kreislauf (17, 117) verläuft,
-- bzw. möglicherweise sogar auch an einer anderen Seite der Zelle(n) als derjenigen verläuft, an der der zweite Kreislauf (21) verläuft.

11. Fahrzeug mit der Anordnung nach Anspruch 4 allein oder in Kombination mit einem der Ansprüche 5 bis 9, wobei die Mittel (45, 79, 81, 83, 97) zum Ansteuern der Ventile zumindest umfassen:
- einen ersten Temperatursensor (45) zum Erfassen der Temperatur an oder in der Nähe der Zellen oder Gruppen von Zellen, und
- einen zweiten Temperatursensor (79) zum Erfassen der Temperatur ausgehend von einer Außenumgebung (39) des Fahrzeugs,
- Mittel (81) zum Betätigen der Ventile und
- eine Datenverarbeitungseinheit (83), die mit dem ersten und dem zweiten Temperatursensor und den Mitteln zum Betätigen der Ventile verbunden ist, damit zumindest einige der Maßnahmen an den Ventilen Temperaturdaten des ersten Temperatursensors (45) und/oder des zweiten Temperatursensors (79) berücksichtigen.

12. Fahrzeug nach Anspruch 11, wobei die Datenverarbeitungseinheit (83) so wirkt, dass sie eine Fluidströmung in Wärmeaustausch sicherstellt, und zwar
- über zumindest eine aus der ersten, der zweiten und der weiteren Fluidzuführung (27, 29, 25) während eines ersten Zeitraums, und
- über zumindest zwei aus der ersten, der zweiten und der weiteren Fluidzuführung (27, 29, 25) während eines zweiten Zeitraums,
und Folgendes berücksichtigt:
- Temperaturdaten zumindest des zweiten Temperatursensors (79) während zumindest des ersten Zeitraums,
- Temperaturdaten zumindest des ersten Temperatursensors (45) während zumindest des zweiten Zeitraums.

13. Fahrzeug nach Anspruch 11 oder 12, wobei
- die Mittel (45, 79, 81, 83, 97) zum Ansteuern der Ventile ferner zumindest einen dritten Sensor (97) zum Erfassen von Daten bezüglich der Entladetiefe (DOD) der Batterie und/oder des Ladezustands (SOC) der Batterie umfassen, und
- die Datenverarbeitungseinheit (83) mit dem zumindest einen dritten Sensor (97) verbunden ist, so dass zumindest einige der Maßnahmen an den Ventilen die von dem dritten Sensor (97) erfassten Daten berücksichtigen.

14. Fahrzeug, das in einer Außenumgebung (39) angeordnet ist und die Anordnung nach Anspruch 4 allein oder in Kombination mit einem der Ansprüche 5 bis 9 umfasst, wobei die Mittel (45, 79, 81, 83, 97) zum Ansteuern der Ventile umfassen:
- zumindest einen Sensor (97) zum Erfassen von Daten bezüglich der Entladetiefe (DOD) der Batterie und/oder des Ladezustands (SOC) der Batterie,
- Mittel (81) zum Betätigen der Ventile und
- eine Datenverarbeitungseinheit (83), die mit dem zumindest einen Sensor (97) verbunden ist, so dass zumindest einige der Maßnahmen an den Ventilen (47) Daten berücksichtigen, die von dem Sensor (97) zur Erfassung von Daten bezüglich der Entladetiefe der Batterie und/oder des Ladezustands der Batterie erfasst wurden.

15. Fahrzeug nach einem der Ansprüche 11 bis 14, umfassend den zweiten Fluiddurchgang (19, 119), der zwischen zwei wärmeleitenden Platten (67a, 67b) oder zwei Reihen von wärmeleitenden Platten (67c, 67d) verläuft, die mehrere parallel angeordnete zweite Fluiddurchgänge (19, 119) definieren, wobei
- das in dem ersten Fluiddurchgang (17, 117) umzuwälzende Fluid (15) ein erstes Fluid ist,
- das in dem zweiten Fluiddurchgang (19, 119) umzuwälzende Fluid (15) ein zweites Fluid ist, das sich von dem ersten Fluid unterscheidet, und
- das erste und das zweite Fluid in getrennten Kreisläufen (85, 87) strömen.

16. Fahrzeug nach Anspruch 15, wobei
- der zweite Fluiddurchgang (19, 119) und die Platten (67a, 67b; 67c, 67d) unter der elektrischen Batterie angeordnet sind und
- das Fluid oder zumindest eines der Fluide, das in dem bzw. den zweiten Fluiddurchgängen (19, 119) umgewälzt werden soll, eine Flüssigkeit ist.

17. Fahrzeug nach einem der Ansprüche 11 bis 14, umfassend:
- den zweiten Fluiddurchgang (19, 119) und
- zumindest eine Rückführung, bei der der zweite Fluiddurchgang (19, 119) mit einem Rückführungskreislauf in Verbindung steht, um zumindest einen Teil des Fluids aus dem zweiten Fluiddurchgang nach Durchlaufen der Vorrichtung (43) zur Wärme- bzw. Kältezufuhr der Anordnung nach Anspruch 5 oder 6 wieder in die zweite Zuführung (29) einzuleiten.

18. Fahrzeug nach einem der Ansprüche 11 bis 17, wobei
- die Mittel (35, 41, 45, 47, 79, 81, 83, 97) zur Regulierung der Fluidströmung ferner zumindest eine Pumpe oder ein Gebläse (41) für die Umwälzung des Fluids bzw. der Fluide umfassen und
- wobei nach der Pumpe oder dem Gebläse in Richtung der Fluidströmung von stromaufwärts nach stromabwärts zuerst die umlaufenden Durchgänge (21) und dann der erste und/oder der zweite Fluiddurchgang vorhanden sind, so dass Fluid zuerst in die weitere Fluidzuführung (25) und dann in die erste Fluidzuführung (27) und/oder in die zweite Fluidzuführung (29) strömt.

## Claims

1. Assembly comprising:
- a plurality of cells (10) or of groups (100) of cells of an electric vehicle battery (1), of which at least:
-- a first cell and a second cell separated from each other by a gap (15), or
-- a first group of cells and a second group of cells separated from each other by a gap (115),
- the assembly further comprising at least two of a first fluid passage (17, 117), a second fluid passage (19, 119) and a peripheral fluid passage (21),
-- the first fluid passage (17, 117) passing in said space (15, 115), and located between two opposing first sides (11a, 13; 111a, 113a) which face each other:
--- of the first cell and of the second cell (11, 13) respectively, or
--- of the first and second groups (111, 113) of cells respectively, the first passage (17, 117) being connected to a first supply (27) of fluid to be circulated in thermal exchange with the first and second cells or the first and second groups of cells,
-- the second fluid passage (19, 119) being located on second sides (11b, 111b, 113b):
--- of the first cell and of the second cell respectively, or
--- of the first and second groups of cells respectively,
the second fluid passage (19, 119) being also connected to a second supply (29) of fluid to be circulated in thermal exchange with the first and second cells or with the first and second groups of cells, and
-- the peripheral fluid passage (21) being located around the cells (10) or groups (100) of cells, in thermal exchange with them, on sides (643) thereof other than said first sides (11a, 13 ;111a, 113a) of the cells or groups of cells, respectively, said peripheral fluid passage (21) being connected to an additional supply (25) of fluid to be circulated in thermal exchange with said cells or groups of cells, and
- the assembly further comprising a thermal insulator (33) located such that said second fluid passage (19, 119) and/or the peripheral fluid passage (21) is interposed between the thermal insulator (33) and:
-- at least the first and second cells, or
-- at least the first and second groups (640') of cells,

2. Assembly comprising:
- a plurality of cells or of groups of cells of an electric vehicle battery (1), of which at least:
-- a first cell and a second cell separated from each other by a gap (15), or
-- a first group and a second group of cells separated from each other by a gap (115),
- the assembly further comprising :
-- a structure (61) containing a phase change material (65), the structure being arranged between two opposite first sides (111a, 113a) which face each other:
--- on the first cell and of the second cell respectively, or
--- on the first group and second group of cells respectively,
-- or another said structure (61) containing a phase-change material (65) arranged around the cells (10) or groups (100) of cells,
- the assembly further comprising at least two of a first fluid passage (17,117), a second fluid passage (19,119) and a peripheral fluid passage (21):
-- the first fluid passage (17,117) passing in said space (15,115), the first fluid passage being connected to a first supply (27) of fluid to be circulated in thermal exchange with the phase change (65) material of the structure (61),
-- the second fluid passage (19,119) located on second sides (11b;111b,113b):
--- of the first cell and of the second cell (11,13) respectively, or
--- of the first and second groups (111, 113) of cells respectively,
the second fluid passage being connected to a second supply (29) of fluid to be circulated in thermal exchange with the first and second cells or the first and second groups of cells,
said other structure (61) containing, accordingly, a phase-change material (65) arranged around the cells (10) or groups (100) of cells,
-- the peripheral fluid passage (21) being located in said other structure (61), said peripheral fluid passage being connected to an additional supply (25) of fluid to be circulated in thermal exchange with the phase change (65) material of said other structure (61), on sides (100d, 111d) other than said first sides of the cells or groups of cells respectively, and
- the assembly further comprising a thermal insulator (33) located such that said second fluid passage (19,119) or peripheral fluid passage (21) is interposed between the thermal insulator (33) and:
-- at least the first and second cells, or
-- at least the first and second groups of cells.

3. Assembly according to claim 1 or 2, which further comprises fluid flow control means (35, 41, 45, 47, 79, 81, 83, 97) operative to ensure a circulation of fluid in said thermal exchange:
- via at least one of the first, second and additional fluid supplies, during a first period of time, and
- via at least two of the first, second and additional fluid supplies, during a second period of time.

4. The assembly according to claim 1 or 2, which further comprises fluid flow control means (35,41,45,47,79,81,83,97) operative to provide a circulation of fluid in said thermal exchange and comprising:
- valves (47) on the first, second and/or additional fluid supplies (25, 27, 29), and
- means (45, 79, 81, 83, 97) for controlling the valves acting as a function of temperature data of said cells (10) or groups (100) of cells and/or data relating to the charge or discharge of the battery.

5. Assembly according to any one of the preceding claims, wherein:
- between two opposite said first sides (11a, 13; 111a, 113a) facing each other, or
- on said second sides (11b, 111b, 113b), or
- on said sides (100d, 111d) other than the first sides of the cells or groups of cells, respectively, there are arranged a plurality of first fluid passages (17, 117) or a plurality of second fluid passages (19, 119) or a plurality of peripheral fluid passages (21), separated from each other, so that different fluids can flow through them without mixing with each other.

6. Assembly according to claim 5, wherein the at least one of said plurality of first fluid passages (17,117), or plurality of second fluid passages (19,119), or plurality of peripheral fluid passages (21) is arranged in contact with a phase-change material (60) with which it is in thermal exchange when fluid is flowing.

7. Assembly according to any one of the preceding claims, which further comprises a device (43) for supplying calories or frigories with which at least one of said fluids is placed in thermal exchange, upstream of the thermal exchange with the cells (10) or groups (100) of cells, so as to adapt the temperature of said fluid.

8. Assembly according to claim 2 alone or in combination with any one of claims 3 to 6, which further comprises a device (43) for supplying calories or frigories placed in thermal exchange with at least one of said fluids, upstream of the thermal exchange with the cells (10) or groups (100) of cells, so as to adapt the temperature of said fluid in accordance with the desired state of the phase-change material (65).

9. Assembly according to any one of the preceding claims, wherein said peripheral fluid passage (21) communicates with:
- the first fluid passage (17, 117), and/or
- the second fluid passage (19, 119),
so that fluid to be circulated therein is at least partly common.

10. Assembly according to any one of the preceding claims, which comprises, for the thermal management of the battery (1), a plurality of thermal control circuits including:
- a first circuit which comprises said at least one first fluid passage (17, 117) and which passes between two adjacent cells,
- a second circuit comprising said peripheral fluid passage (21) and which passes around a stack of cells, and
- a third circuit which comprises said second fluid passage (19,119) and which passes:
-- along a face of the cell(s) other than the one along which the first circuit (17, 117) passes,
-- or possibly also along a face of the cell(s) other than that along which the second circuit (21) passes.

11. Vehicle comprising the assembly according to claim 4, alone or in combination with any one of claims 5 to 9, wherein the means for controlling the valves (45,79,81,83,97) comprise at least:
- a first temperature sensor (45) for sensing the temperature at or near said cells or groups of cells, and
- a second temperature sensor (79) for sensing the temperature of an environment (39) outside the vehicle,
- means (81) for actuating the valves, and
- a data-processing unit (83) connected to said first and second temperature sensors and to said valve operating means, so that at least some of the actions on the valves take into account temperature data from the first temperature sensor (45) and/or the second temperature sensor (79).

12. Vehicle according to claim 11, wherein the data processing unit (83) acts to provide a fluid flow in said thermal exchange:
- via at least one of the first, second and further supplies (27,29,25) of fluid, during a first period of time, and
- via at least two of the first, second and further fluid supplies (27,29,25), during a second period of time, and takes into account:
- temperature data from at least the second temperature sensor (79) during at least the first time period,
- temperature data from at least the first temperature sensor (45) during at least the second time period.

13. Vehicle according to claim 11 or 12, wherein:
- the means (45, 79, 81, 83, 97) for controlling the valves further comprise at least one third sensor (97) for acquiring data relating to the depth of discharge (DOD) of the battery, and/or to the state of charge (SOC) of the battery, and
- the data processing unit (83) is connected to the said at least one third sensor (97) so that at least some of the actions on the valves take account of data acquired by the third sensor (97).

14. Vehicle disposed in an outdoor environment (39) and comprising the assembly according to claim 4 alone or in combination with any one of claims 5 to 9, wherein the means (45,79,81,83,97) for controlling the valves comprise:
- at least one sensor (97) for acquiring data relating to the depth of discharge (DOD) of the battery, and/or to the state of charge (SOC) of the battery,
- means (81) for actuating the valves, and
- a data processing unit (83) connected to the said at least one sensor (97), so that at least some of the actions on the valves (47) take account of data acquired by the said sensor (97) for acquiring the data relating to the depth of discharge of the battery, and/or to the state of charge of the battery.

15. Vehicle according to any one of claims 11 to 14, comprising the second fluid passage (19,119), which passes between two thermally conductive plates (67a,67b), or two series of thermally conductive plates (67c,67d) defining a plurality of said second fluid passages (19,119) arranged in parallel,
- said fluid (15) to be circulated in the first fluid passage (17, 117) is a first fluid,
- said fluid (15) to be circulated in the second fluid passage (19,119) is a second fluid different from the first fluid, and,
- the first and second fluids flow in separate circuits (85, 87).

16. Vehicle according to claim 15, wherein :
- the second fluid passage (19, 119) and said plates (67a, 67b; 67c, 67d) are arranged under the electric battery, and
- said fluid, or at least one of the fluids, to be circulated in the second fluid passage(s) (19, 119) is a liquid.

17. Vehicle according to any one of claims 11 to 14, which comprises:
- the second fluid passage (19, 119), and
- at least one recycling in which the second fluid passage (19, 119) communicates with a recirculation circuit, for reintroducing into the second supply (29) at least part of the said fluid coming from the second fluid passage, after passing through the device (43) for supplying calories or frigories to the assembly according to claim 5 or 6.

18. Vehicle according to any one of claims 11 to 17, wherein:
- the fluid flow control means (35, 41, 45, 47, 79, 81, 83, 97) further comprise at least one pump or fan (41) for the circulation of the fluid(s), and,
- wherein, after the pump or fan, in the direction of fluid circulation from upstream to downstream, there are, firstly said peripheral passages (21) and then said first fluid passage and/or second fluid passage, so that the fluid flows first into said additional supply (25) of fluid and then into the first fluid supply (27) and/or into the second fluid supply (29).
